(19) **Europäisches Patentamt**
**European Patent Office**
**Office européen des brevets**

(11) **EP 2 723 077 B1**

(12) **EUROPEAN PATENT SPECIFICATION**

(45) Date of publication and mention
of the grant of the patent:
**21.07.2021  Bulletin 2021/29**

(51) Int Cl.:
*H04N 19/463* *(2014.01)*   *H04N 19/176* *(2014.01)*
*H04N 19/11* *(2014.01)*   *H04N 19/593* *(2014.01)*
*H04N 19/46* *(2014.01)*

(21) Application number: **12800165.8**

(22) Date of filing: **13.06.2012**

(86) International application number:
**PCT/JP2012/003863**

(87) International publication number:
**WO 2012/172796 (20.12.2012 Gazette 2012/51)**

(54) **IMAGE ENCODING DEVICE, IMAGE ENCODING METHOD AND IMAGE ENCODING PROGRAM, AS WELL AS IMAGE DECODING DEVICE, IMAGE DECODING METHOD AND IMAGE DECODING PROGRAM**

BILDKODIERUNGSVORRICHTUNG, BILDKODIERUNGSVERFAHREN UND BILDKODIERUNGSPROGRAMM SOWIE BILDDEKODIERUNGSVORRICHTUNG, BILDDEKODIERUNGSVERFAHREN UND BILDDEKODIERUNGSPROGRAMM

DISPOSITIF DE CODAGE D'IMAGE, PROCÉDÉ DE CODAGE D'IMAGE ET PROGRAMME DE CODAGE D'IMAGE, ET DISPOSITIF DE DÉCODAGE D'IMAGE, PROCÉDÉ DE DÉCODAGE D'IMAGE ET PROGRAMME DE DÉCODAGE D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2011   JP 2011135321**
**17.06.2011   JP 2011135322**

(43) Date of publication of application:
**23.04.2014   Bulletin 2014/17**

(73) Proprietor: **JVC KENWOOD Corporation
Kanagawa 221-0022 (JP)**

(72) Inventors:
• **KUMAKURA, Toru
Yokohama-shi
Kanagawa 221-0022 (JP)**
• **FUKUSHIMA, Shigeru
Yokohama-shi
Kanagawa 221-0022 (JP)**
• **UEDA, Motoharu
Yokohama-shi
Kanagawa 221-0022 (JP)**

(74) Representative: **Wagner & Geyer
Partnerschaft mbB
Patent- und Rechtsanwälte
Gewürzmühlstrasse 5
80538 München (DE)**

(56) References cited:
**EP-A1- 2 719 180    EP-A1- 2 720 461**

• **YAMAMOTO T ET AL: "Flexible representation of intra prediction modes", 2. JCT-VC MEETING; 21-7-2010 - 28-7-2010; GENEVA; (JOINT COLLABORATIVE TEAM ON VIDEO CODING OF ISO/IEC JTC1/SC29/WG11 AND ITU-T SG.16 ); URL:HTTP://WFTP3.ITU.INT/AV-ARCH/JCTVC-SITE/, no. JCTVC-B063, 23 July 2010 (2010-07-23), XP030007643, ISSN: 0000-0048**
• **SANDEEP KANUMURI ET AL: "Enhancements to Intra Coding", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/, no. JCTVC-D235, 14 January 2011 (2011-01-14), XP030008275, ISSN: 0000-0013**

**(Cont. next page)**

- KUMAKURA T ET AL: "Fixing the number of mpm candidates", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-F340, 1 July 2011 (2011-07-01), XP030009363,
- SEREGIN V ET AL: "Intra mode parsing without access neighbouring information", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-F378, 2 July 2011 (2011-07-02), XP030009401,
- MEI GUO ET AL.: 'Context Dependent Intra Mode Coding' JOINT COLLABORATIVE TEAM ON VIDEO CODING (JCT-VC) OF ITU-T SG16 WP3 AND ISO/IEC JTC1/SC29/WG11 5TH MEETING 15 March 2011, GENEVA, SWITZERLAND, XP030008707
- MEI GUO ET AL.: 'Improved Intra Mode Coding' JOINT COLLABORATIVE TEAM ON VIDEO CODING (JCT- VC) OF ITU-T SG16 WP3 AND ISO/IEC JTC1/SC29/WG11 4TH MEETING 15 January 2011, DAEGU, KOREA, XP030008206
- EHSAN MAANI ET AL.: 'Differential Coding of Intra Modes (DCIM)' JOINT COLLABORATIVE TEAM ON VIDEO CODING (JCT-VC) OF ITU-T SG16 WP3 AND ISO/IEC JTC1/SC29/WG11 2ND MEETING 16 July 2010, GENEVA, CH, XP030007688
- TOMOYUKI YAMAMOTO ET AL.: 'Flexible Representation of Intra Prediction Modes' JOINT COLLABORATIVE TEAM ON VIDEO CODING (JCT-VC) OF ITU-T SG16 WP3 AND ISO/IEC JTC1/SC29/WG11 2ND MEETING 16 July 2010, GENEVA, CH, XP030007643
- TORU KUMAKURA ET AL.: 'Fixing the number of mpm candidates' JOINT COLLABORATIVE TEAM ON VIDEO CODING (JCT-VC) OF ITU-T SG16 WP3 AND ISO/IEC JTC1/SC29/WG11 6TH MEETING 01 July 2011, TORINO, IT, XP030009363
- None

**Description**

[TECHNICAL FIELD]

The present invention relates to techniques for picture coding and picture decoding, and particularly to techniques for intra-screen coding and intra-screen decoding.

[BACKGROUND ART]

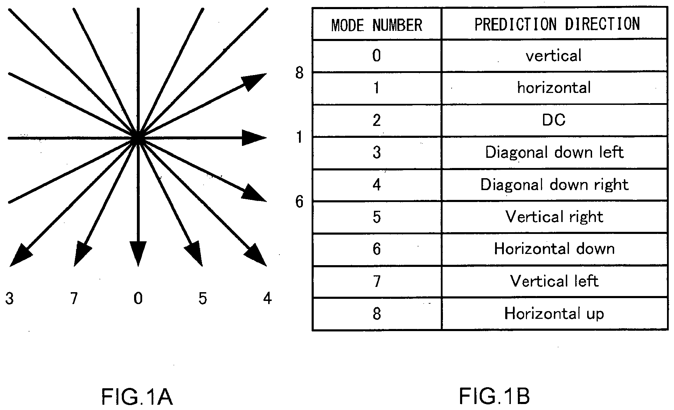

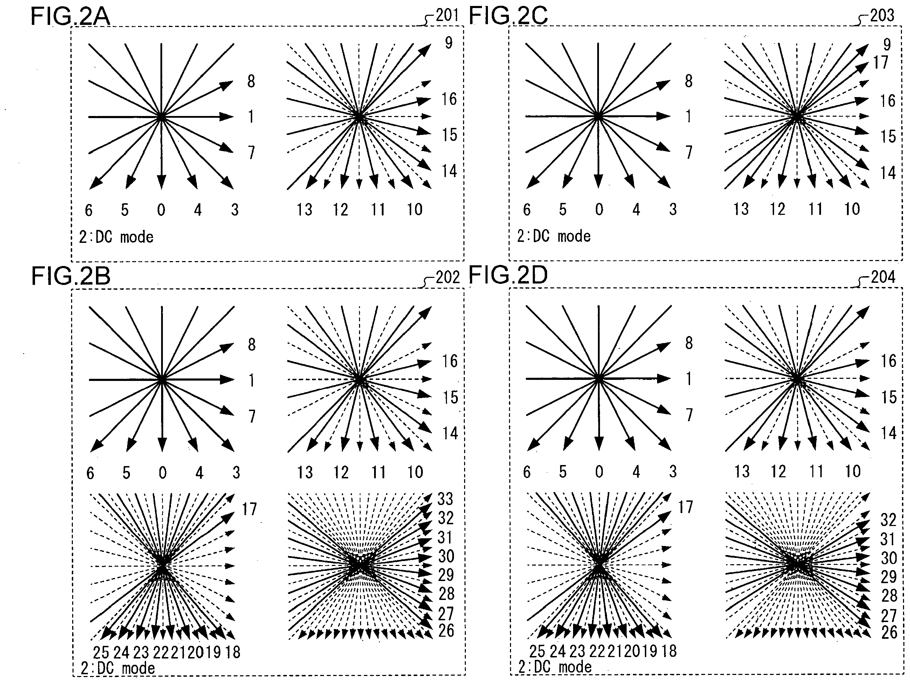

In MPEG-4 AVC, which is an international standard of moving picture coding, a method called intra prediction is employed for intra-screen coding by which processing is completed within one screen. In the intra prediction, a prediction picture of a block to be processed is generated by replicating, in a specified direction, a decoded sampled value adjacent to the block to be processed. There are nine prediction directions defined in MPEG-4 AVC, as shown in Figs. 1A and 1B, and a prediction direction is appropriately specified by transmitting the mode number of an intra prediction mode, which indicates a prediction direction, for each block.
The quality of a prediction picture can be improved by increasing the number of definitions of prediction directions. The symbol 201 of Fig. 2A shows an example in which 17 prediction directions are defined, and the symbol 202 of Fig. 2B shows an example in which 34 prediction directions are defined. However, an increase of the number of definitions of prediction directions leads to an increase of the information amount of intra prediction modes to be transmitted. Since the code amount associated with intra prediction modes accounts for a larger proportion of the total amount of generated codes when the number of definitions of prediction directions increases, an efficient transmission method is highly required.
JP 2009-246975 A describes a means for reducing the total number of intra prediction modes to be transmitted so as to reduce the code amount associated with the intra prediction modes. In the method of JP 2009-246975 A, the intra prediction modes for multiple blocks are scanned in units of predetermined integration units, and, when all the intra prediction modes within an integration unit are the same, only the intra prediction mode is transmitted for the integration unit, thereby reducing the number of intra prediction modes to be transmitted.
YAMAMOTO T ET AL, "Flexible representation of intra prediction modes", 2. JCT-VC MEETING; 21-7-2010 - 28-7-2010; GENEVA; (JOINT COLLABORATIVE TEAM ON VIDEO CODING OF ISO/IEC JTC1/SC29/WG11 AND ITU-T SG.16); URL:HTTP://WFTP3.ITU.INT/AV-ARCH/JCTVC-SITE/, July 23, 2010, JCTVC-B063, discloses that FDMR (Flexible Directional Mode Representation) is introduced as the novel intra prediction mode representation. With FDMR, intra prediction mode is directly used in the probable mode derivation process instead of using 'intermediate mode mode' approach. FDMR also provides functionality to utilize the rank order of the intra prediction modes in the probable mode derivation process. In addition, FDMR is designed to use more than one probable mode. FDMR provides the flexible framework for intra prediction mode coding with the comparable coding efficiency compare to the one included in TMuC. In addition, coding efficiency improvement can also be obtained when adding some complexity in encoding or decoding process.

[SUMMARY OF THE INVENTION]

[PROBLEM TO BE SOLVED BY THE INVENTION]

In intra predication, an intra prediction mode is generally coded based on a probability model of intra prediction modes in which it is assumed that an intra prediction mode for a neighboring block of a block subject to coding in a picture is highly likely to be selected also for the block subject to coding. As an example of presently-used methods, there is a method of defining such a probability model in a simplified way; however, since it cannot be said that the actual probability of intra prediction modes are sufficiently reflected in the method, it has been difficult to efficiently code an intra prediction mode. The method of adaptively defining an optimal probability model for each block enables efficient coding of an intra prediction mode but also causes complication of intra prediction processing.
Since an appropriate probability model cannot be defined by the method described in JP 2009-246975 A, the aforementioned problem still stands.
The present invention has been made in view of such a situation, and a purpose thereof is to provide techniques for picture coding and picture decoding by which the coding efficiency can be improved while complication of intra prediction processing is prevented.

[MEANS TO SOLVE THE PROBLEM]

To solve the problem above, a picture coding device of an embodiment of the present invention is provided as set forth in claim 1.

According to another aspect of the present invention, a picture coding method is provided as set forth in claim 2.

A picture decoding device of yet another embodiment of the present invention is provided as set forth in claim 4.

A further embodiment of the present invention is a picture decoding method as set forth in claim 5.

A picture coding computer program of the present invention is defined in claim 3, and a picture decoding computer program of the present invention is defined in claim 6.

[ADVANTAGE OF THE PRESENT INVENTION]

According to the embodiment, the coding efficiency can be improved while complication of intra prediction processing is prevented.

[BRIEF DESCRIPTION OF THE DRAWINGS]

Figs. 1 are diagrams that show the prediction directions of 9 patterns of intra prediction modes;

Figs. 2 are diagrams that show the prediction directions of 17 patterns, 34 patterns, and 18 patterns of intra prediction modes;

Figs. 3 are diagrams that show coding trees for coding an intra prediction mode;

Figs. 4 are diagrams that show coding syntax for transmitting an intra prediction mode according to the coding trees shown in Figs. 3;

Fig. 5 is a block diagram that shows a configuration of a picture coding device for performing a method for coding an intra prediction mode according to an embodiment;

Fig. 6 is a block diagram that shows a detailed configuration of an intra prediction mode coding unit shown in Fig. 5 according to a first embodiment;

Fig. 7 is a flowchart that shows a procedure for coding an intra prediction mode performed by the intra prediction mode coding unit shown in Fig. 6;

Fig. 8 is a block diagram that shows a configuration of a picture decoding device for performing a method for decoding an intra prediction mode according to the embodiment;

Fig. 9 is a block diagram that shows a detailed configuration of an intra prediction mode decoding unit shown in Fig. 8 according to the first embodiment;

Fig. 10 is a flowchart that shows a procedure for decoding an intra prediction mode performed by the intra prediction mode decoding unit shown in Fig. 9;

Fig. 11 is a flowchart that shows a procedure for calculating a most probable mode list in the first embodiment;

Fig. 12 is a flowchart that shows a procedure for calculating a most probable mode determination flag and a most probable mode index in the first embodiment;

Fig. 13 is a flowchart that shows a procedure for calculating a non-probable mode index in the first embodiment;

Fig. 14 is a flowchart that shows a procedure for coding a non-probable mode index in the first embodiment;

Fig. 15 is a flowchart that shows a procedure for decoding a non-probable mode index in the first embodiment;

Fig. 16 is a flowchart that shows a procedure for calculating a subject prediction mode in the first embodiment;

Fig. 17 is a flowchart that shows the operation of the intra prediction mode coding unit in a second embodiment;

Fig. 18 is a diagram that shows a block configuration of a picture and reference blocks;

Fig. 19 is a flowchart that shows a procedure for calculating a most probable mode list in the second embodiment;

Fig. 20 is a flowchart that shows processing for coding a non-probable mode index in the second embodiment;

Fig. 21 is a flowchart that shows the operation of the intra prediction mode decoding unit in the second embodiment;

Fig. 22 is a flowchart that shows a procedure for decoding a non-probable mode index in the second embodiment;

Fig. 23 is a diagram that shows coding syntax for an intra prediction mode available for the coding device or decoding device in the first embodiment;

Fig. 24 is a diagram that shows coding syntax for an intra prediction mode available for the coding device or decoding device in the second embodiment;

Fig. 25 is a flowchart that shows a procedure for calculating a most probable mode list in a third embodiment; and

Fig. 26 is a diagram that shows an example of a reference table used to calculate a most probable mode list in the third embodiment.

[BEST MODE FOR CARRYING OUT THE INVENTION]

Only the "third embodiment" illustrates the invention as claimed. The other embodiments are provided for illustrative purposes. First, a background technique of an embodiment of the present invention will be described.

In the following description, a "target block" means a block to be coded when a coding process is performed by a picture coding device, while it means a block to be decoded when a decoding process is performed by a picture decoding device. Also, a "processed block" means a decoded block that has been coded when a coding process is performed by a picture coding device, while it means a decoded block when a decoding process is performed by a picture decoding device. Hereinafter, such terms will be used in these meanings unless otherwise noted.

[Coding trees]

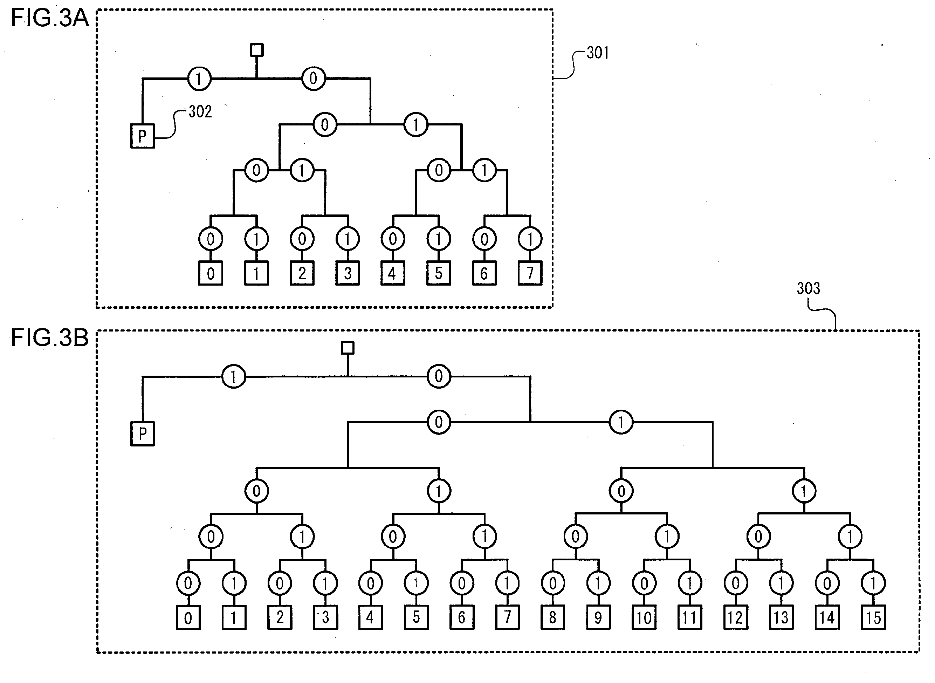

Figs. 3 are diagrams that show coding trees for coding the 9 patterns of intra prediction modes shown in Figs. 1. A method for transmitting an intra prediction mode according to MPEG-4 AVC follows the coding tree of the symbol 301 in Fig. 3A. In Figs. 3, an inner node (circle) is assigned a code, and a leaf (square) is assigned a mode number of intra prediction. A leaf denoted by the symbol 302 is a most probable mode, which will be described later. The most probable mode is assigned "1", and the mode 7 is assigned the code "0111", for example.

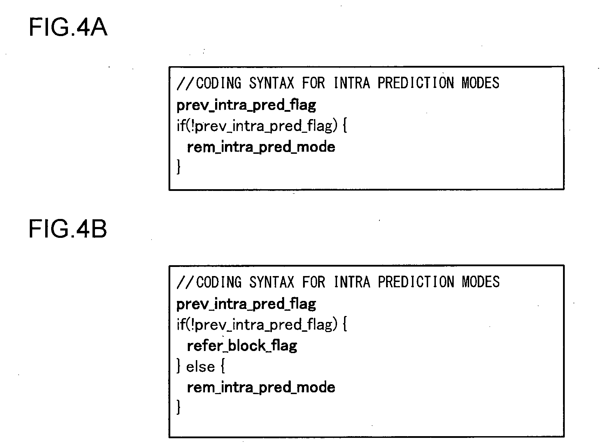

Figs. 4 are diagrams that show coding syntax for transmitting an intra prediction mode according to the coding trees shown in Figs. 3. In Figs. 4A and 4B, prev_intra_pred_flag is a syntax element identifying if it is a most probable mode, and rem_intra_pred_mode is a syntax element indicating a mode number. In a decoding process, 1 bit of prev_intra_pred_flag is first read from a coded sequence, and, if the prev_intra_pred_flag is 1, the intra prediction mode will be set to the most probable mode and the next syntax will be handled. If the prev_intra_pred_flag is not 1, another 3 bits of prev_intra_pred_flag will be read out, and the intra prediction mode will be set to a prediction mode indicated by rem_intra_pred_mode.

The 17 patterns of intra prediction modes shown in Fig. 2A can be coded according to the coding tree of the symbol 303 in Fig. 3B, using a similar transmission method.

[Most probable mode]

In order to determine a most probable mode, processed neighboring blocks, which are adjacent to a target block, are referred to. The processed neighboring blocks are defined as the uppermost block among blocks positioned adjacent to the left side of the target block (referred to as a "reference block A") and the leftmost block among blocks positioned adjacent to the upper side of the target block (referred to as a "reference block B").

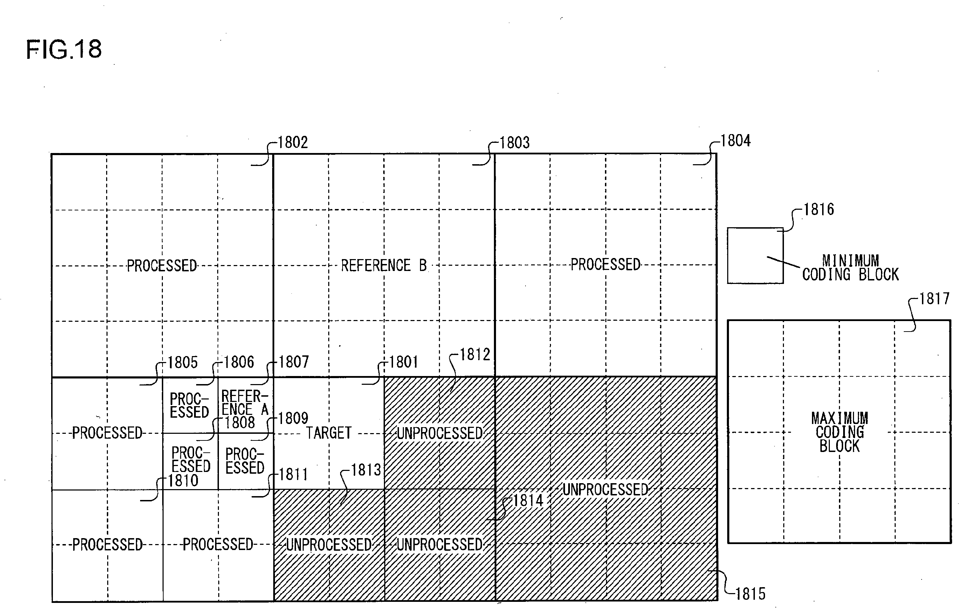

An example of processed neighboring reference blocks will be described with reference to Fig. 18. With respect to a target block 1801 in Fig. 18, all the blocks spatially positioned above or/and to the left of the target block 1801 are processed blocks (symbols 1802-1811), and the other blocks are unprocessed blocks (symbols 1812-1815). The two blocks 1807 and 1809 are positioned adjacent to the left side of the target block 1801, and the upper block 1807 is defined as the reference block A. Also, only the block 1803 is positioned adjacent to the upper side of the target block 1801, and hence, the block 1803 is defined as the reference block B.

When the intra prediction mode numbers of the reference blocks A and B are defined as modeIdxA and modeIdxB, respectively, the index of the most probable mode, mpmIdx, of the target block is defined by the following formula:

$$mpmIdx = min(modeIdxA, modeIdxB)$$

Namely, the most probable mode is identical with one of the intra prediction modes for the reference blocks.

[Relationship between the most probable mode and coding trees]

The coding trees shown in Figs. 3 assign a 1-bit code to a most probable mode and assign a 1+3-bit, i.e., a 4-bit code to each of the other modes, according to the following probability model:

p(mpm) ≥ 0.5, where mpm indicates a most probable mode
p(m) = 0.0625 = (1-p(mpm))/8, where m ≠ mpm

Such a transmission method has the advantage of reducing the code amount of intra prediction modes on average by assigning a shorter code word to a subject prediction mode when the mode is identical with a most probable mode.

However, the actual probability of a most probable mode p(mpm) is merely about 0.2 on average, and the coding trees shown in Figs. 3 do not necessarily reflect the actual distribution of intra prediction modes. Therefore, it cannot be said that the method described above is an optimal method for improving coding efficiency.

If only the improvement of coding efficiency is considered, an effective way is, for example, to adaptively switch among coding trees according to the distribution of prediction modes of processed blocks. However, such a method requires condition judgment and process branches for each block, causing an increase of circuit size and complication of processing.

The present embodiment enables improvement of coding efficiency while preventing an increase of circuit size or complication of processing.

[Coding device]

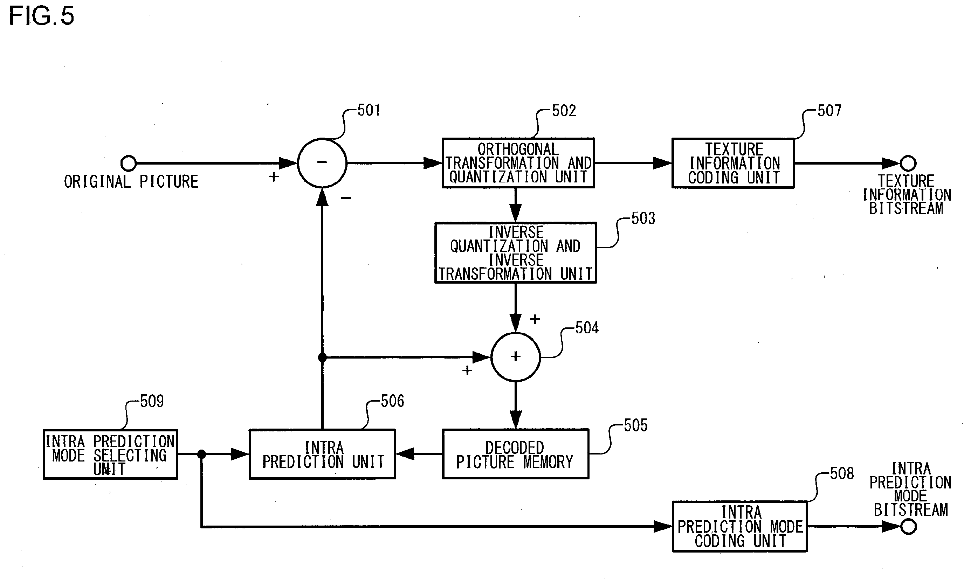

A picture coding device preferable to implement the present invention will be described with reference to the drawings. Fig. 5 is a block diagram that shows a configuration of a picture coding device according to an embodiment. A picture coding device of the embodiment comprises a subtracting unit 501, an orthogonal transformation and quantization unit 502, an inverse quantization and inverse transformation unit 503, an adding unit 504, a decoded picture memory 505, an intra prediction unit 506, a texture information coding unit 507, an intra prediction mode coding unit 508, and an intra prediction mode selecting unit 509. Since the embodiment of the present invention focuses on intra prediction, constituting elements related to inter-screen prediction are not illustrated in the drawings and the description thereof will be omitted.

The intra prediction mode selecting unit 509 selects an optimal intra prediction mode for each block of a picture and provides the selected intra prediction mode to the intra prediction unit 506 and the intra prediction mode coding unit 508.

The intra prediction mode coding unit 508 performs variable-length coding on an input intra prediction mode and outputs an intra prediction mode bitstream. The configuration and operation of the intra prediction mode coding unit 508 will be detailed later.

The intra prediction unit 506 generates an intra prediction picture based on an input intra prediction mode and the decoded picture of a neighboring block stored in the decoded picture memory 505 and provides the intra prediction picture thus generated to the subtracting unit 501.

The subtracting unit 501 subtracts an intra prediction picture from an original picture subject to coding so as to generate a difference picture and provides the generated difference signal to the orthogonal transformation and quantization unit 502.

The orthogonal transformation and quantization unit 502 performs orthogonal transformation and quantization on a difference picture so as to generate texture information and provides the texture information thus generated to the inverse quantization and inverse transformation unit 503 and the texture information coding unit 507.

The texture information coding unit 507 performs entropy coding on texture information and outputs a texture information bitstream.

The inverse quantization and inverse transformation unit 503 performs inverse quantization and inverse orthogonal transformation on texture information received from the orthogonal transformation and quantization unit 502 so as to generate a decoded difference signal and provides the decoded difference signal thus generated to the adding unit 504.

The adding unit 504 adds an intra prediction picture and a decoded difference signal so as to generate a decoded picture and stores the decoded picture thus generated in the decoded picture memory 505.

[Decoding device]

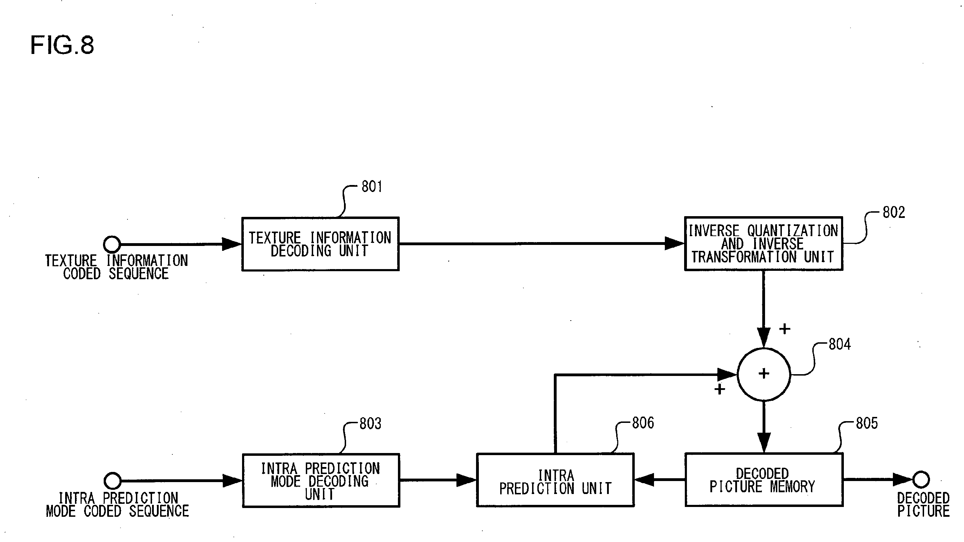

A picture decoding device preferable to implement the present invention will now be described with reference to the drawings. Fig. 8 is a block diagram that shows a configuration of a moving picture decoding device according to the embodiment. A picture decoding device of the embodiment comprises a texture information decoding unit 801, an inverse quantization and inverse transformation unit 802, an intra prediction mode decoding unit 803, an adding unit 804, a decoded picture memory 805, and an intra prediction unit 806. Since the embodiment of the present invention focuses on intra prediction, constituting elements related to inter-screen prediction are not illustrated in the drawings and the description thereof will be omitted.

The decoding process performed by the picture decoding device shown in Fig. 8 corresponds to the decoding process performed within the picture coding device shown in Fig. 5. Accordingly, the configurations of the inverse quantization and inverse transformation unit 802, adding unit 804, decoded picture memory 805, and intra prediction unit 806 shown in Fig. 8 have functions corresponding to those of the configurations of the inverse quantization and inverse transformation unit 503, adding unit 504, decoded picture memory 505, and intra prediction unit 506 in the picture coding device shown in Fig. 5, respectively.

The intra prediction mode decoding unit 803 performs entropy decoding on an input intra prediction mode bitstream so as to generate an intra prediction mode and provides the intra prediction mode thus generated to the intra prediction unit 806. The configuration and operation of the intra prediction mode decoding unit 803 will be detailed later.

The intra prediction unit 806 generates an intra prediction picture based on an input intra prediction mode and the decoded picture of a neighboring block stored in the decoded picture memory 805 and provides the intra prediction picture thus generated to the adding unit 804.

The texture information decoding unit 801 performs entropy decoding on texture information so as to generate texture information and provides the texture information thus generated to the inverse quantization and inverse transformation unit 802.

The inverse quantization and inverse transformation unit 802 performs inverse quantization and inverse orthogonal transformation on texture information received from the texture information decoding unit 801 so as to generate a decoded difference signal and provides the decoded difference signal thus generated to the adding unit 804.

The adding unit 804 adds an intra prediction picture and a decoded difference signal so as to generate a decoded picture and stores the decoded picture thus generated in the decoded picture memory 805 to output the picture.

The coding process and decoding process for an intra prediction mode according to the embodiment of the present invention are performed by the intra prediction mode coding unit 508 in the moving picture coding device shown in Fig. 5 and the intra prediction mode decoding unit 803 in the moving picture decoding device shown in Fig. 8, respectively. In the following, the coding process and decoding process for an intra prediction mode according to the embodiment will be detailed.

[Coding blocks]

In the embodiment, the screen is hierarchically divided into rectangle blocks, as shown in Fig. 18, and processes on the respective blocks are sequentially performed in a certain process order. Each divided block is referred to as a coding block. The block 1817 in Fig. 18 corresponds to the maximum division unit in the embodiment, which is referred to as the maximum coding block. On the other hand, the block 1816 in Fig. 18 corresponds to the minimum division unit in the embodiment, which is referred to as the minimum coding block. Hereinafter, the description will be made assuming that the minimum coding block has a size of 4x4 pixels and the maximum coding block has a size of 16x16 pixels.

[Prediction block]

Among coding blocks, a unit block by which intra prediction is performed will be referred to as a prediction block. A prediction block has a size in a range from the size of the minimum coding block to the size of the maximum coding block inclusive. In Fig. 18, the blocks 1802, 1803, and 1804 are 16x16 blocks, the blocks 1805, 1810, 1811, and 1801 are 8x8 blocks, and the blocks 1806, 1807, 1808, and 1809 are 4x4 blocks. The blocks 1812, 1813, 1814, and 1815 are unprocessed blocks, and the sizes of the coding blocks are not fixed. In the coding process, an optimal size of a prediction block is determined and transmitted. In the decoding process, the size of a prediction block is derived from a bitstream. Hereinafter, the description will be made using a prediction block as a unit of processing.

[Reference blocks and reference intra prediction modes]

The reference blocks are defined as a block A, which is the uppermost block among blocks positioned adjacent to the left side of the target block, and a block B, which is the leftmost block among blocks positioned adjacent to the upper side of the target block. The prediction mode for the block A is defined as refModeA, and the prediction mode for the block B is defined as refModeB. The intra prediction mode for each reference block is also referred to as a "reference intra prediction mode". When there is no reference block, the reference intra prediction mode is set to the DC prediction mode (also referred to as the "average value mode").

(First embodiment)

[Prediction block size and intra prediction modes]

The composition of intra prediction modes is changed according to the size of the prediction block. For a 4x4 block are defined the 17 patterns of intra prediction modes shown as the symbol 201 in Fig. 2A, and for an 8x8 block and a 16x16 block are defined the 34 patterns of intra prediction modes shown as the symbol 202 in Fig. 2B.

[Coding procedure]

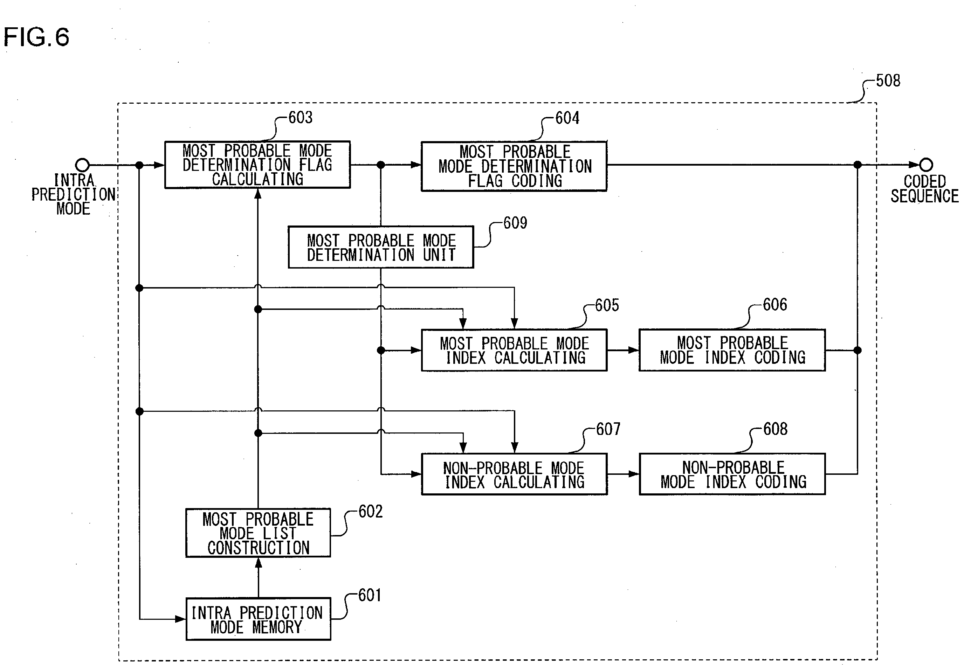

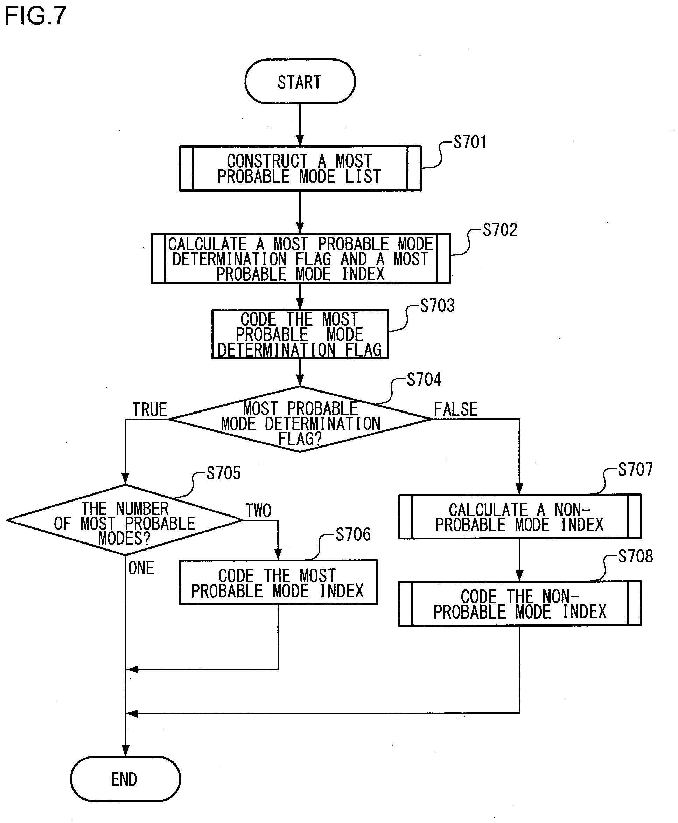

There will now be described the first embodiment of the method for coding an intra prediction mode according to the embodiment of the present invention. Fig. 6 is a block diagram of a detailed configuration of the intra prediction mode coding unit 508 shown in Fig. 5 according to the first embodiment. The intra prediction mode coding unit 508 of the first embodiment comprises an intra prediction mode memory 601, a most probable mode list construction unit 602, a most probable mode determination flag calculating unit 603, a most probable mode determination flag coding unit 604, a most probable mode index calculating unit 605, a most probable mode index coding unit 606, a non-probable mode index calculating unit 607, a non-probable mode index coding unit 608, and a most probable mode determination unit 609. In the following, a procedure for coding an intra prediction mode will be described also with reference to the flowchart of Fig. 7.

The most probable mode list construction unit 602 derives the intra prediction modes refModeA and refModeB of neighboring blocks from the intra prediction mode memory 601, constructs a most probable mode list mpmList, and determines the size of the most probable mode list mpmlistsize (step S701). The procedure for constructing a most probable mode list will be detailed later. The most probable mode list construction unit 602 also stores the subject intra prediction mode in the intra prediction mode memory 601. In the present embodiment, the most probable mode list size mpmListSize is set to either 1 or 2; mpmListSize is set to 1 when the reference modes refModeA and refModeB are identical with each other, while mpmListSize is set to 2 when the reference modes refModeA and refModeB are different from each other.

The most probable mode determination flag calculating unit 603 derives the subject prediction mode and the most probable mode list mpmList and calculates a most probable mode determination flag mpmFlag. Meanwhile, the most probable mode index calculating unit 605 calculates a most probable mode index mpmIndex (step S702). The most probable mode determination flag coding unit 604 then codes the most probable mode determination flag mpmFlag (step S703). The procedures for calculating a most probable mode determination flag and a most probable mode index will be detailed later.

The most probable mode determination unit 609 determines the most probable mode determination flag mpmFlag (step S704).

If the most probable mode determination flag mpmFlag is true, the most probable mode index coding unit 606 will determine the most probable mode index mpmIndex (step S705) and, if mpmListSize=1, the most probable mode index mpmIndex will always be zero, so that the most probable mode index coding unit 606 will terminate the process without coding mpmIndex. If mpmListSize=2, the most probable mode index coding unit 606 will code the most probable mode index mpmIndex (step S706) before terminating the process.

If the most probable mode determination flag mpmFlag is false, the non-probable mode index calculating unit 607 will calculate a non-probable mode index remModeIndex (step S707) and the non-probable mode index coding unit 608 will code the calculated non-probable mode remModeIndex (step S708). The procedures for calculating a non-probable mode index and coding a non-probable mode will be detailed later.

[Procedure for constructing the most probable mode list]

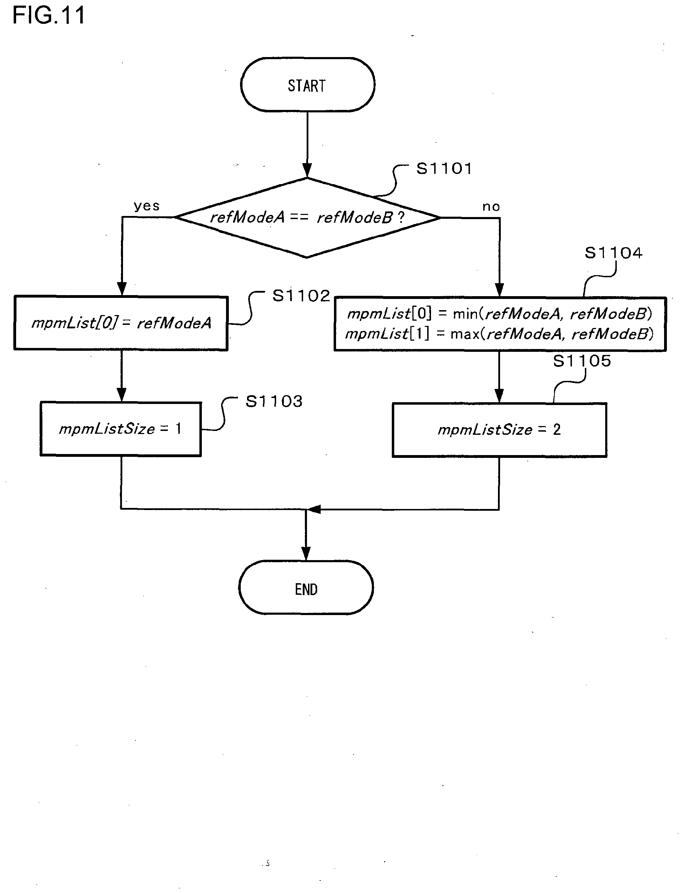

The procedure for constructing the most probable mode list at the step S701 in Fig. 7 will be detailed with reference to the flowchart of Fig. 11.

The most probable mode list construction unit 602 derives the intra prediction modes refModeA and refModeB of neighboring blocks from the intra prediction mode memory 601 to compare the refModeA and refModeB (step S1101).

When refModeA and refModeB are identical with each other, mpmList[0] is set to refModeA (step S1102) and mpmListSize is set to 1 (step S1103) before the process proceeds to the step S702 in Fig. 7.

When refModeA and refModeB are different from each other, mpmList[0] is set to min(refModeA,refModeB) and mpmList[1] is set to max(refModeA,refModeB) (step S1104) and mpmListSize is set to 2 (step S1105) before the process proceeds to the step S702 in Fig. 7.

[Procedures for calculating the most probable mode determination flag and most probable mode index]

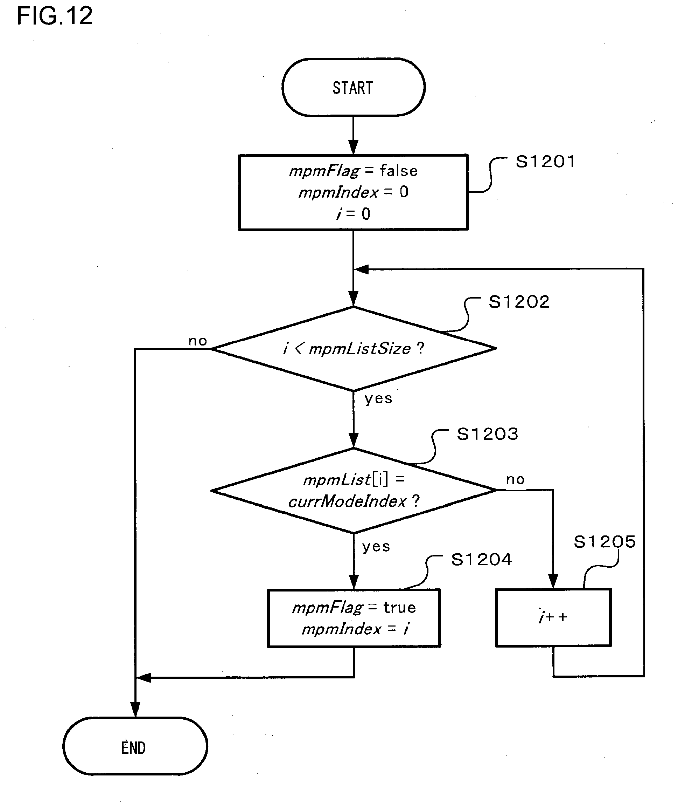

The procedures for calculating the most probable mode determination flag and the most probable mode index at the step S702 in Fig. 7 will be detailed with reference to the flowchart of Fig. 12.

In the procedures, mpmList is scanned in ascending order to advance the process. The most probable mode determination flag calculating unit 603 initializes the most probable mode determination flag mpmFlag to false, and the most probable mode index calculating unit 605 initializes the most probable mode index mpmIndex to 0. Also, a parameter i used to scan the mpmList is initialized to 0 (step S1201).

If the parameter i is less than mpmListSize (step S1202), i.e., if all the elements of mpmList are not scanned yet, mpmList[i] and currModeIndex will be compared (step S1203). When mpmList[i] and currModeIndex are identical with each other, it means that the subject prediction mode is identical with the i-th element in the most probable mode list, so that mpmFlag and mpmIndex are set to true and i, respectively (step S1204) before the process proceeds to the step S703 in Fig.7. When mpmList[i] and currModeIndex are different from each other, on the other hand, i is incremented by one (step S1205) and the scanning is continued.

If the parameter i is greater than or equal to mpmListSize at the step S1202, i.e., if all the elements of mpmList have been scanned, the procedures for calculating the most probable mode determination flag and the most probable mode index will be terminated, and the process will proceed to the step S703 in Fig. 7. Such a case indicates that the subject prediction mode is not included in the most probable mode list, and resetting of mpmFlag and mpmIndex is not performed. Namely, mpmFlag is false, and mpmIndex is 0.

[Procedure for calculating the non-probable mode index]

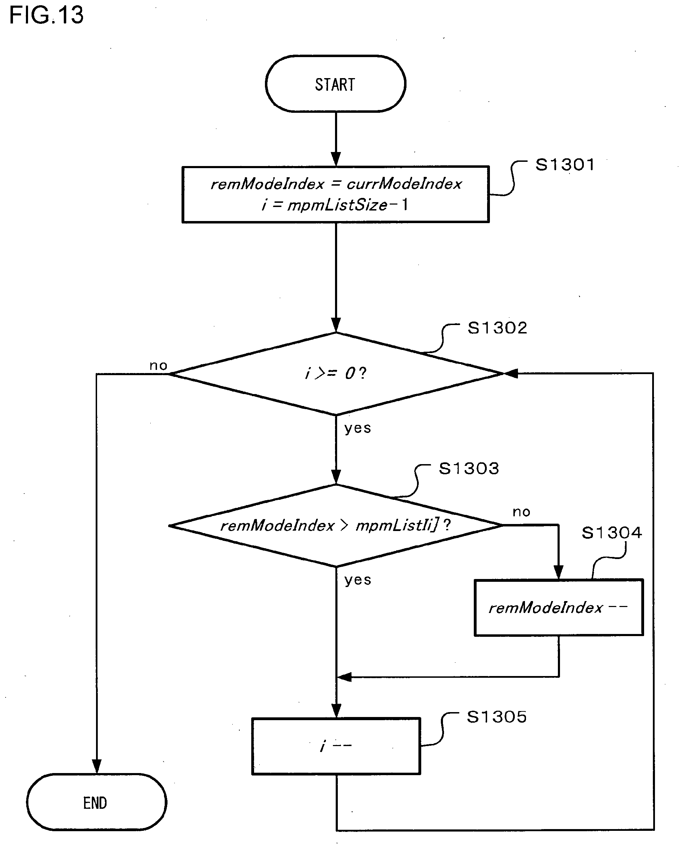

The procedure for calculating the non-probable mode index at the step S707 in Fig. 7 will be detailed with reference to the flowchart of Fig. 13.

In this procedure, mpmList is scanned in descending order of the index to advance the process. The non-probable mode index calculating unit 607 initializes the non-probable mode index remModeIndex to the subject prediction mode currModeIndex and also initializes the parameter i used to scan the mpmList to (mpmListSize-1) (step S1301) .

If the parameter i is greater than or equal to 0 (step S1302), i.e., if all the elements of mpmList are not scanned yet, remModeIndex and mpmList[i] will be compared (step S1303). If remModeIndex is greater than mpmList[i], the value of remModeIndex will be decremented by one (step S1304). Thereafter, the value of the parameter i is also decremented by one (step S1305) and the scanning is continued.

If the parameter i is less than 0 at the step S1302, i.e., if all the elements of mpmList have been scanned, the procedure for calculating the non-probable mode index will be terminated, and the process will proceed to the step S708 in Fig. 7.

[Procedure for coding the non-probable mode index]

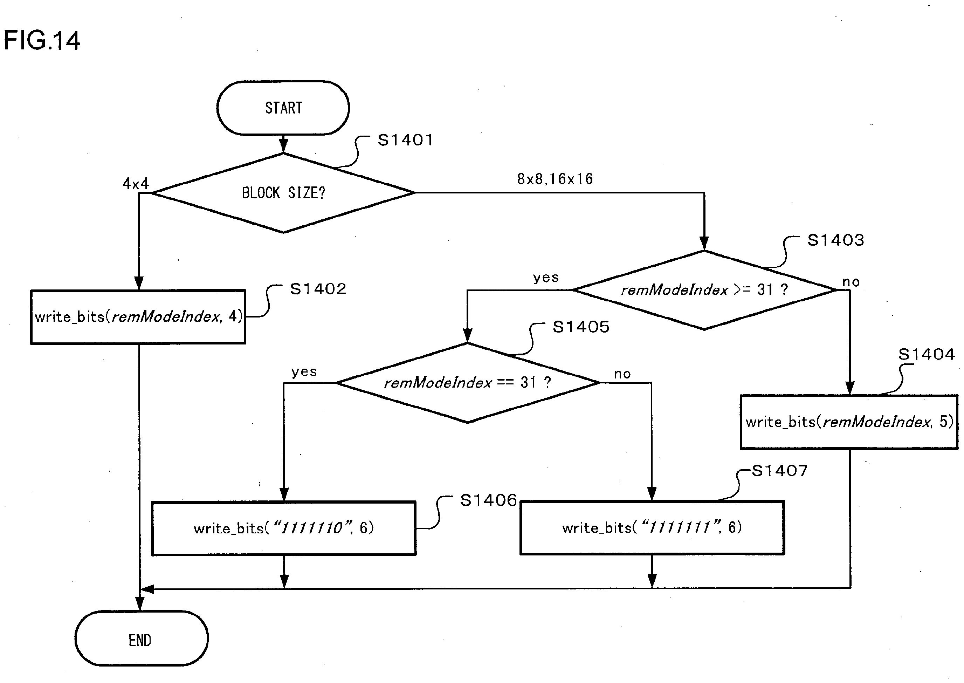

The procedure for coding the non-probable mode index at the step S708 in Fig. 7 will be detailed with reference to the flowchart of Fig. 14.

The non-probable mode index coding unit 608 determines the size of the target block (step S1401).

When the target block is a 4x4 block, the 17 patterns of intra predictions are defined therefor. Accordingly, in the procedure for calculating a non-probable mode index described above, remModeIndex is converted to one of the values [0, 15] when one most probable mode is provided, and remModeIndex is converted to one of the values [0, 14] when two most probable modes are provided. In either case, 4 bits are sufficient to express remModeIndex with a fixed length, so that 4-bit fixed-length coding is performed on remModeIndex (step S1402) before the process is terminated.

When the target block is an 8x8 block or a 16x16 block, the 34 patterns of intra predictions are defined therefor. In this case, in the procedure for calculating a non-probable mode index described above, remModeIndex is converted to one of the values [0, 32] when one most probable mode is provided, and remModeIndex is converted to one of the values [0, 31] when two most probable modes are provided. When one most probable mode is provided, 33 patterns are possible for the non-probable mode index; accordingly, a 5-bit fixed length is not sufficient, and variable-length coding is necessary. When remModeIndex is less than 31 (step S1403), 5-bit fixed-length coding is performed on remModeIndex (step S1404) before the process is terminated. In the case where remModeIndex is greater than or equal to 31 (step S1405), the 6-bit sequence "111110" is coded when remModeIndex is 31 (step S1406), and the 6-bit sequence "111111" is coded when remModeIndex is 32 (step S1407), before the process is terminated.

In the present embodiment, the 17 patterns shown as the symbol 201 in Fig. 2A are defined for a 4x4 block, in order to simply code or decode the non-probable mode index of the 4x4 block. In the symbol 201, the prediction directions are basically provided in increments of 11.25 degrees, obtained by dividing 180 degrees by 16 (=180/16). However, only the difference in direction between the mode 9 and mode 8 is 25 degrees, causing degradation in prediction accuracy in such directions. Accordingly, a case is considered where the definition of 18 patterns shown as the symbol 203 in Fig. 2C is employed instead of the definition of the symbol 201. The definition of 18 patterns has the advantage that all the prediction directions can be expressed in increments of 5 degrees, preventing the degradation in prediction accuracy as shown in the symbol 201. In this case, remModeIndex is converted to one of the values [0, 16] when one most probable mode is provided, and remModeIndex is converted to one of the values [0, 15] when two most probable modes are provided. When one most probable mode is provided, 16 patterns are possible for the non-probable mode index; accordingly, as with the cases of an 8x8 block and a 16x16 block in the present embodiment, variable-length coding is necessary, causing complication of the process. Meanwhile, if the definition of 33 patterns shown as the symbol 204 in Fig. 2D is employed for an 8x8 block and a 16x16 block, 5-bit fixed-length coding will be enabled similarly to the processing for a 4x4 block; however, since the number of candidates of intra prediction modes is decreased, a decline in coding efficiency will be caused. In this way, there is a tradeoff relationship between the number of candidates of intra prediction modes and the complication of the process. Since a difference in prediction accuracy due to a small angular difference in the case of a 4x4 block is smaller than that in the case of an 8x8 block or a 16x16 block, and since the influence of the computational amount for a 4x4 block is greater than that for an 8x8 block or a 16x16 block, the definition of 17 patterns of the symbol 201 is employed for a 4x4 block, and the definition of 34 patterns of the symbol 202 is employed for an 8x8 block and a 16x16 block.

[Decoding procedure]

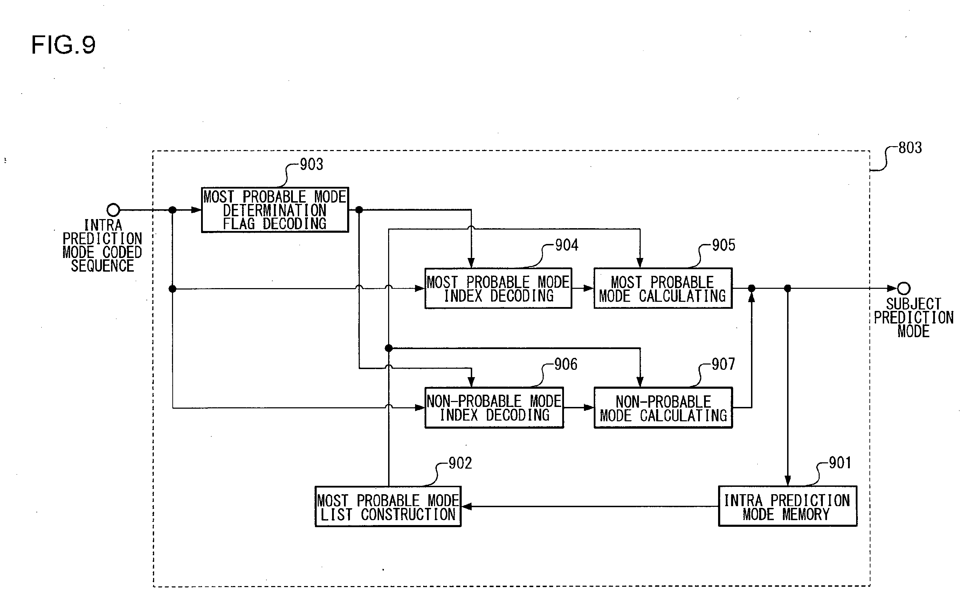

There will now be described the first embodiment of the method for decoding an intra prediction mode according to the embodiment of the present invention. Fig. 9 is a block diagram of a detailed configuration of the intra prediction mode decoding unit 803 shown in Fig. 8 according to the first embodiment. The intra prediction mode decoding unit 803 of the first embodiment comprises an intra prediction mode memory 901, a most probable mode list construction unit 902, a most probable mode determination flag decoding unit 903, a most probable mode index decoding unit 904, a most probable mode calculating unit 905, a non-probable mode index decoding unit 906, and a non-probable mode calculating unit 907.

The intra prediction mode decoding process performed by the intra prediction mode decoding unit 803 shown in Fig. 9 correlates with the intra prediction mode coding process performed by the intra prediction mode coding unit 508 shown in Fig. 6. Accordingly, the configurations of the intra prediction mode memory 901 and most probable mode list construction unit 902 shown in Fig. 9 have the same functions as the configurations of the intra prediction mode memory 601 and most probable mode list construction unit 602 shown in Fig. 6, respectively.

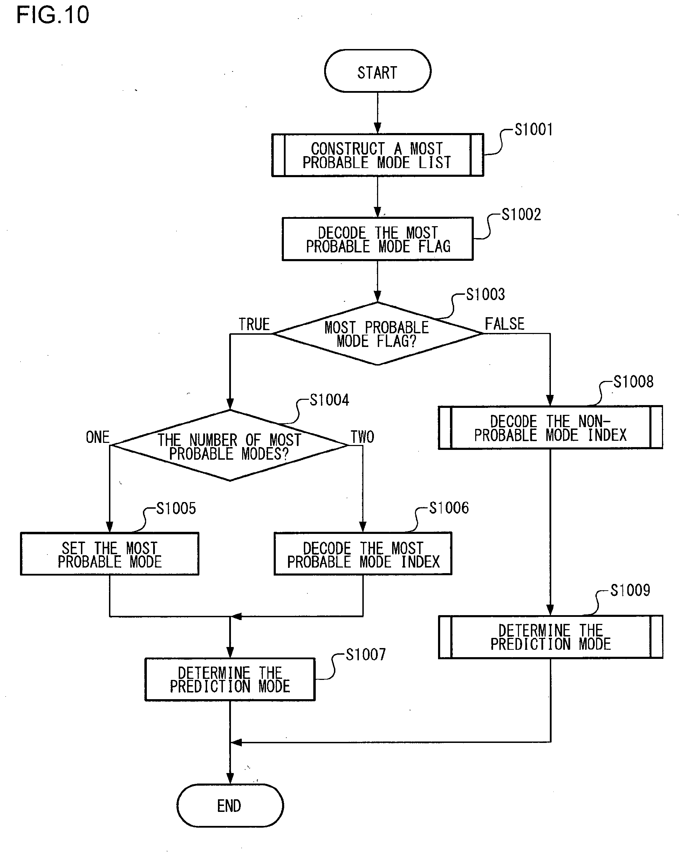

In the following, a procedure for decoding an intra prediction mode will be described also with reference to the flowchart of Fig. 10.

The most probable mode list construction unit 902 derives the intra prediction modes refModeA and refModeB of neighboring blocks from the intra prediction mode memory 901, constructs a most probable mode list mpmList, and determines the size of the most probable mode list mpmlistsize (step S1001). Since the procedure for constructing a most probable mode list follows the procedure shown in the flowchart of Fig. 11, as with the procedure performed by the most probable mode list construction unit 602 in Fig. 6, detailed description thereof will be omitted.

The most probable mode determination flag decoding unit 903 reads 1 bit from a coded sequence and decodes the most probable mode determination flag mpmFlag (step S1002) so as to determine the value of the most probable mode determination flag mpmFlag (step S1003).

If the most probable mode determination flag mpmFlag is true, the most probable mode index decoding unit 904 will determine the number of most probable modes mpmListSize (step S1004). If mpmListSize is 1, the most probable mode index mpmIndex will be set to 0 (step S1005). If mpmListSize is 2, another bit will be read from the coded sequence and the most probable mode index mpmIndex will be decoded (step S1006). Thereafter, the most probable mode calculating unit 905 defines the mpmIndex-th element of the most probable mode list mpmList, i.e., mpmList[mpmIndex], as the subject prediction mode currModeIndex (step S1007) and terminates the process.

If the most probable mode determination flag mpmFlag is false, the non-probable mode index decoding unit 906 will decode the non-probable mode index remModeIndex (step S1008) and the non-probable mode calculating unit 907 will calculate the subject prediction mode currModeIndex based on the calculated remModeIndex (step S1009). Thereafter, the subject prediction mode currModeIndex is stored in the intra prediction mode memory 901 before the process is terminated. The procedures for decoding a non-probable mode index and calculating a subject prediction mode will be described later.

[Procedure for decoding the non-probable mode index]

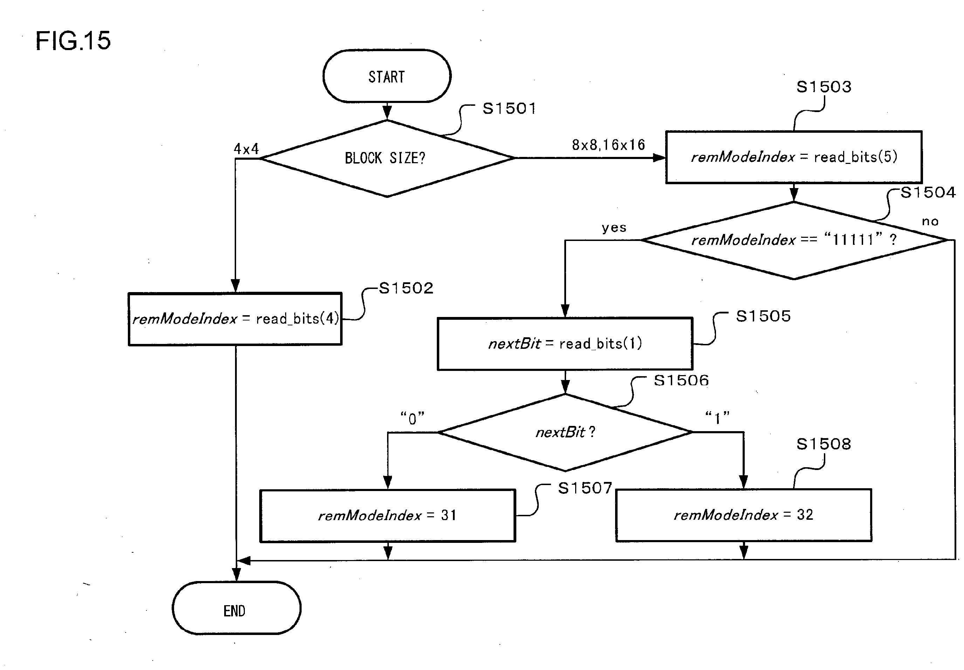

The procedure for decoding the non-probable mode index at the step S1008 in Fig. 10 will be detailed with reference to the flowchart of Fig. 15.

The non-probable mode index decoding unit 906 determines the size of the target block (step S1501).

When the target block is a 4x4 block, 4-bit fixed-length decoding is performed to acquire remModeIndex (step S1502).

When the target block is an 8x8 block or a 16x16 block, 5-bit fixed-length decoding is performed to acquire remModeIndex (step S1503). The value of remModeIndex is then determined (step S1504).

If remModeIndex is other than "11111", the procedure for decoding the non-probable mode index will be terminated, and the process will proceed to the step S1009 in Fig. 10.

If remModeIndex is "11111", 1-bit nextBit will be further decoded (step S1505) and the value of nextBit will be determined (step S1506). If nextBit is "0", remModeIndex will be set to 31, and the procedure for decoding the non-probable mode index will be terminated, so that the process will proceed to the step S1009 in Fig. 10. If nextBit is "0", remModeIndex will be set to 32, and the procedure for decoding the non-probable mode index will be terminated, so that the process will proceed to the step S1009 in Fig. 10.

[Procedure for calculating a prediction mode]

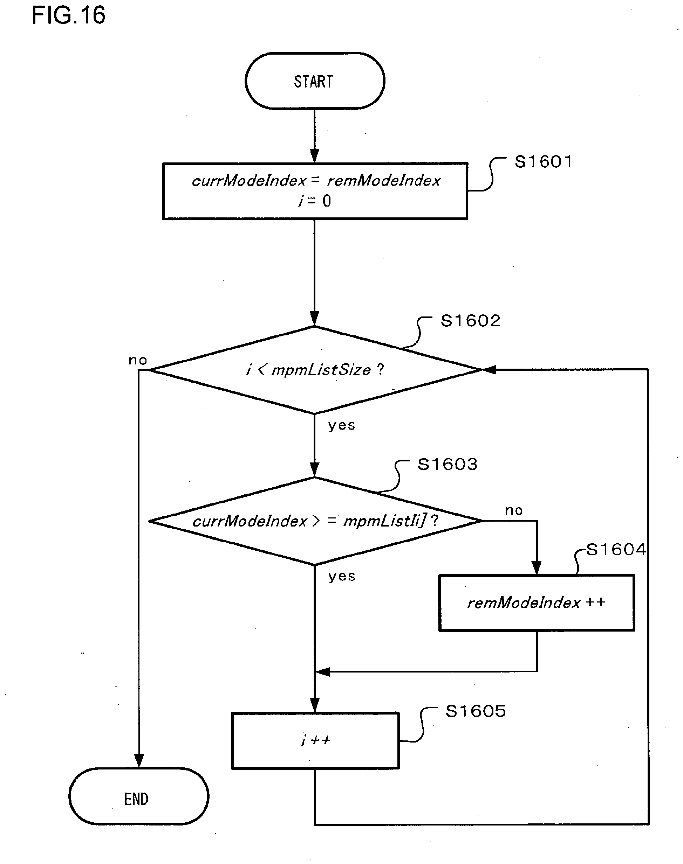

The procedure for calculating a prediction mode at the step S1009 in Fig. 10 will be detailed with reference to the flowchart of Fig. 16.

In this procedure, mpmList is scanned in ascending order of the index to advance the process. The non-probable mode calculating unit 907 initializes the subject prediction mode currModeIndex to the non-probable mode index rem-ModeIndex and also initializes the parameter i used to scan mpmList to 0 (step S1601).

If the parameter i is less than mpmListSize (step S1602), i.e., if all the elements of mpmList are not scanned yet, currModeIndex and mpmList[i] will be compared (step S1603). If currModeIndex is greater than or equal to mpmList[i], the value of currModeIndex will be incremented by one (step S1604). Thereafter, the value of the parameter i is also incremented by one (step S1605) and the scanning is continued.

If the parameter i is greater than or equal to mpmListSize at the step S1602, i.e., if all the elements of mpmList have been scanned, the process will be terminated.

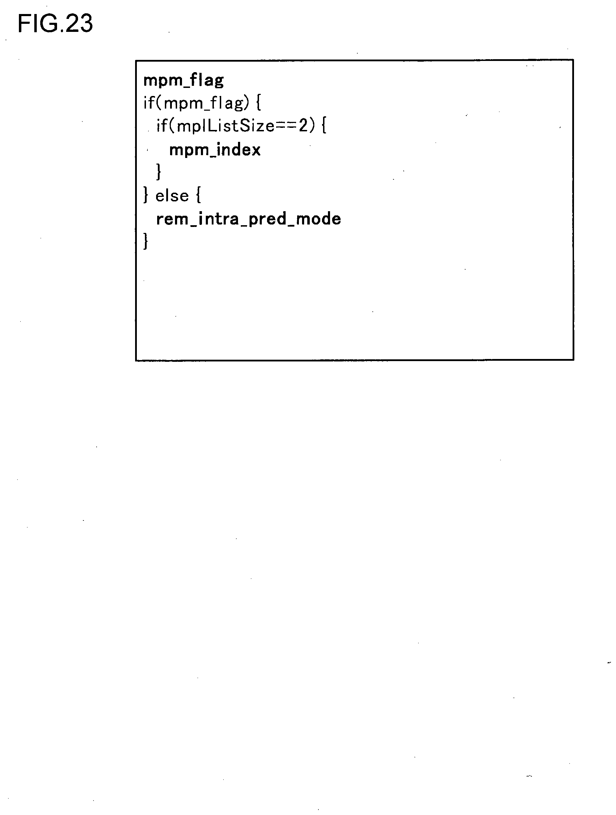

Fig. 23 shows coding syntax for an intra prediction mode in a bitstream output by the coding device or interpreted by the decoding device according to the present embodiment.

(Second embodiment)

The present embodiment differs from the first embodiment in that, if refModeA and refModeB are identical with each other when the most probable mode list is constructed, another prediction mode different from the reference prediction mode will be added to the most probable mode list, so that two most probable modes will be always provided. With such operation, process branches in subsequent coding or decoding processing can be reduced, thereby simplifying the process.

[Prediction block size and intra prediction modes]

In the present embodiment, the composition of intra prediction modes is changed according to the size of the prediction block.

In the present embodiment, the 18 patterns of the symbol 203 in Figs. 2 are defined for a 4x4 block, and the 34 patterns of the symbol 201 together with the symbol 202 in Figs. 2 are defined for an 8x8 block and a 16x16 block. The definitions of 18 patterns and 34 patterns have the advantage that all the prediction directions can be expressed in increments of 11.25 degrees and 7.125 degrees, respectively, so that less degradation in prediction accuracy is seen compared to the definitions of 17 patterns and 33 patterns in which part of directions cannot be expressed. The difference from the first embodiment is the composition of the intra prediction modes for a 4x4 block. Since two most probable modes are always provided in the present embodiment, when 18 patterns of intra prediction modes are defined, the non-probable modes can be always fixed to 16 patterns; accordingly, when fixed-length coding is performed on the non-probable modes, codes can be equally assigned.

[Coding procedure]

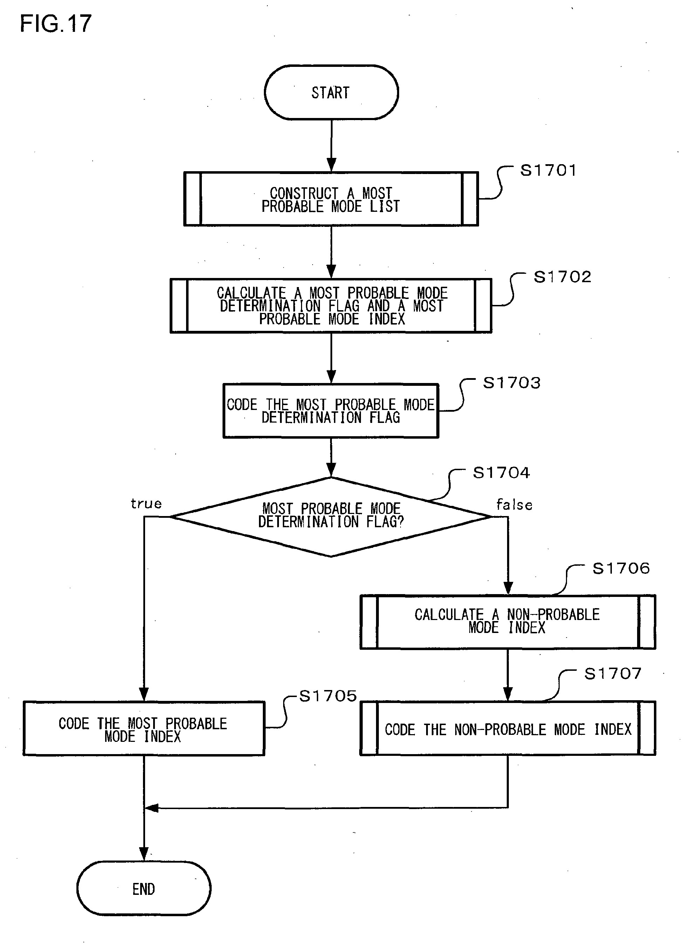

There will now be described the second embodiment of the method for coding an intra prediction mode according to the embodiment of the present invention. Although the configuration of the intra prediction mode coding unit 508 in the second embodiment is the same as that in the first embodiment shown in Fig. 6, detailed operations of the most probable mode list construction unit 602, the most probable mode index coding unit 606, and the non-probable mode index coding unit 608 are different from those in the first embodiment. In the following, the procedure for coding an intra prediction mode will be described with reference to the flowchart of Fig. 17.

The most probable mode list construction unit 602 derives the intra prediction modes for neighboring blocks from the intra prediction mode memory 601, constructs a most probable mode list mpmList, and determines the size of the most probable mode list mpmlistsize (step S1701). The procedure for constructing a most probable mode list will be detailed later. The most probable mode list construction unit 602 also stores the subject intra prediction mode in the intra prediction mode memory 601. The present embodiment differs from the first embodiment in that the most probable mode list mpmList is constructed so that the most probable mode list size mpmListSize is always 2.

The most probable mode determination flag calculating unit 603 and the most probable mode index calculating unit 605 derive the subject prediction mode and the most probable mode list mpmList and calculate the most probable mode determination flag mpmFlag and the most probable mode index mpmIndex (step S1702), and the most probable mode determination flag mpmFlag is coded (step S1703). Since the detailed procedures for calculating the most probable mode determination flag and the most probable mode index are the same as those at S702 in Fig. 7, the description thereof will be omitted.

The most probable mode determination unit 609 determines the most probable mode determination flag mpmFlag (step S1704).

If the most probable mode determination flag mpmFlag is true, the most probable mode index coding unit 606 will code the most probable mode index mpmIndex (step S1705) and terminate the process. Since the most probable mode list size mpmListSize is always set to 2 in the present embodiment, the procedure of determining the most probable mode list size mpmListSize (step S705) in the first embodiment shown in Fig. 7 is omitted.

If the most probable mode determination flag mpmFlag is false, the non-probable mode index calculating unit 607 will calculate a non-probable mode index remModeIndex (step S1706) and the non-probable mode index coding unit 608 will code the calculated non-probable mode remModeIndex (step S1707). Since the procedure for calculating the non-probable mode index is the same as that at the step S707 in Fig. 7, the description thereof will be omitted. The procedure for coding a non-probable mode will be detailed later.

[Procedure for constructing the most probable mode list]

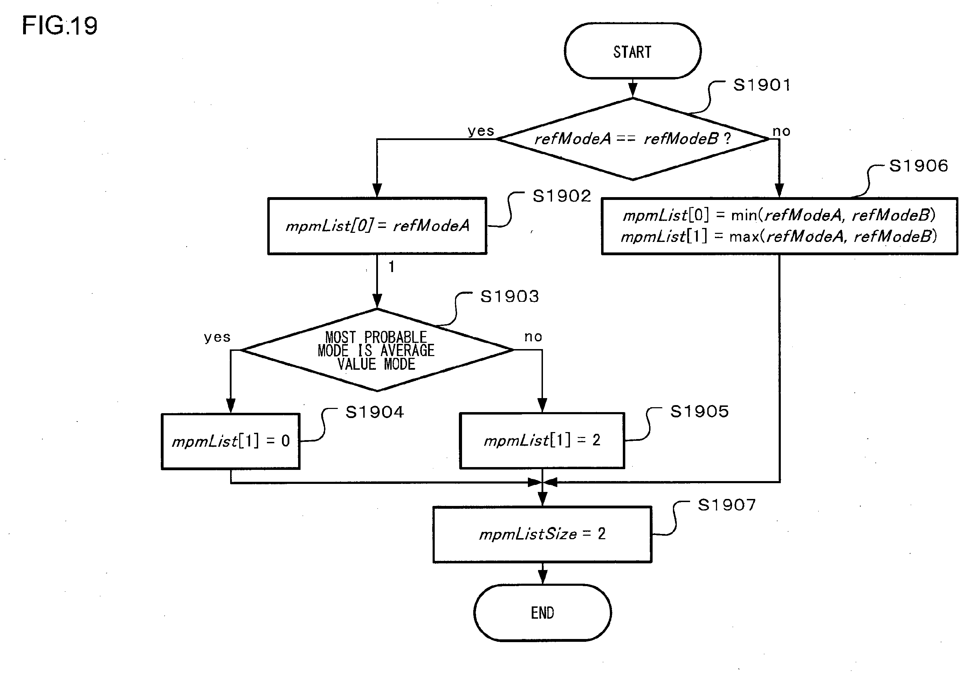

The procedure for determining a reference intra prediction mode at the step S701 in Fig. 17 will be detailed with reference to the flowchart of Fig. 19.

The most probable mode list construction unit 602 derives the intra prediction modes refModeA and refModeB of neighboring blocks from the intra prediction mode memory 601 to compare the refModeA and refModeB (step S1901).

When refModeA and refModeB are identical with each other, mpmList[0] is set to refModeA (step S1902). Subsequently, whether or not refModeA is the average value mode is determined (step S1903), and, if refModeA is the average value mode, mpmList[1] will be set to 0 (step S1904). If refModeA is not the average value mode, mpmList[1] will be set to 2 (step S1905). As shown in the symbols 201 and 202 in Figs. 2, 0 indicates the vertical direction prediction mode, and 2 indicates the average value mode. The mpmList[1] should be a mode having a value different from that of the mpmList[0]. In the present embodiment, mpmList[1] is set to the average value mode when refModeA is not the average value mode; if mpmList[1] is set to the average value mode when refModeA is the average value mode, mpmList[1] and mpmList[0] will be the same. There should be at least two or more candidates of the prediction mode to be set for mpmList[1]. In the present embodiment, the value to be set for mpmList[1] is determined in advance, which is any of refModeA, refModeB, and a value that does not change in the coding process. However, a different value may be set as the predetermined value; for example, mpmList[1] may be set to 1 (horizontal direction prediction mode) at the step S1904. It is generally preferable that such a predetermined value is a prediction mode occurring frequently. Thereafter, mpmListSize is set to 2 (step S1407) before the process proceeds to the step S1702 in Fig. 17.

When refModeA and refModeB are different from each other, mpmList[0] is set to min(refModeA,refModeB) and mpmList[1] is set to max(refModeA,refModeB) (step S1906) and mpmListSize is set to 2 (step S1907) before the process proceeds to the step S1702 in Fig. 17.

[Procedure for coding the non-probable mode index]

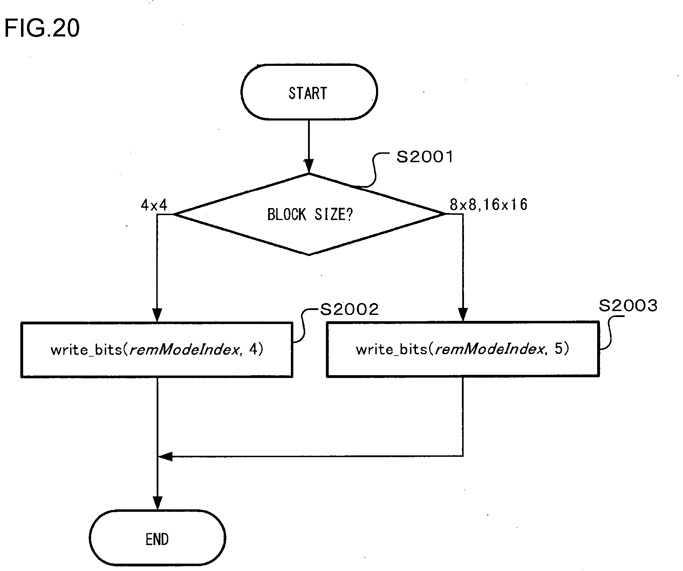

The procedure for coding the non-probable mode index at the step S1707 in Fig. 17 will be detailed with reference to the flowchart of Fig. 20.

The non-probable mode index coding unit 608 determines the size of the target block (step S2001).

When the target block is a 4x4 block, the 18 patterns of intra predictions are defined therefor. In the procedure for calculating the non-probable mode index described above, remModeIndex is converted to one of the values [0, 15] as two most probable modes are provided. Since 4 bits are sufficient to express remModeIndex with a fixed length, 4-bit fixed-length coding is performed on remModeIndex (step S2002) before the process is terminated.

When the target block is an 8x8 block or a 16x16 block, the 34 patterns of intra predictions are defined therefor. In the procedure for calculating the non-probable mode index described above, remModeIndex is converted to one of the values [0, 31] as two most probable modes are provided. Since 5 bits are sufficient to express remModeIndex with a fixed length, 5-bit fixed-length coding is performed on remModeIndex (step S2003) before the process is terminated.

In the first embodiment, the number of non-probable modes changes according to the number of most probable modes, causing complication of the process due to variable-length coding of a non-probable mode or a decline in the coding efficiency due to a decrease of the number of candidates of intra prediction modes. In the second embodiment, on the other hand, it is ensured that the number of most probable modes is 2, so that fixed-length coding can be always performed on the non-probable mode index without causing a decrease of the number of candidates of intra prediction modes; accordingly, the coding efficiency can be further improved while the simple coding procedure is maintained.

[Decoding procedure]

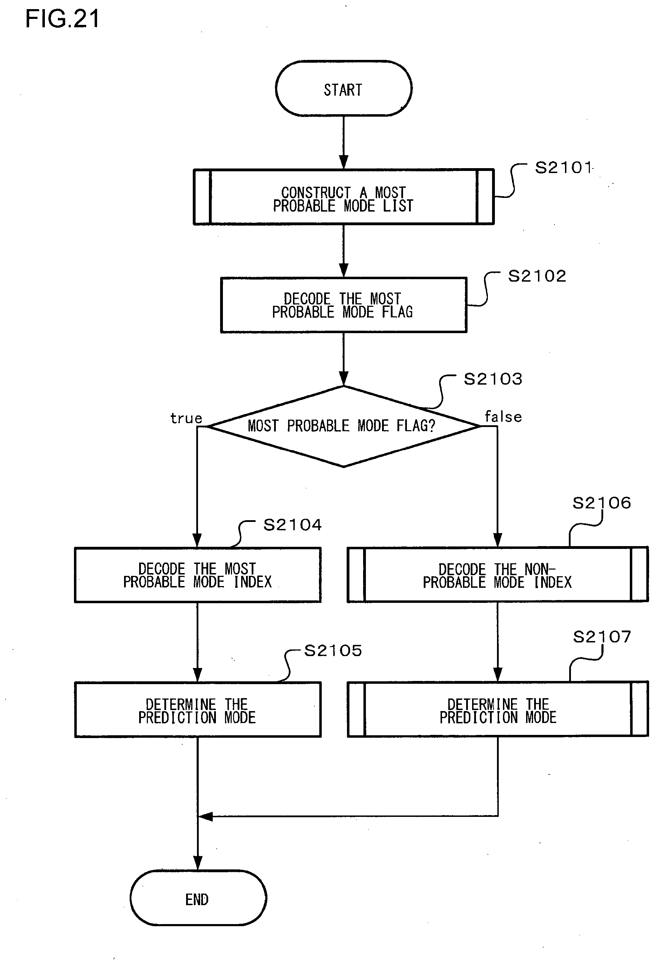

There will now be described the second embodiment of the method for decoding an intra prediction mode according to the embodiment of the present invention. Although the configuration of the intra prediction mode decoding unit 803 in the second embodiment is the same as that in the first embodiment shown in Fig. 9, detailed operations of the most probable mode list construction unit 902, the most probable mode index decoding unit 904, and the non-probable mode index decoding unit 906 are different from those in the first embodiment. In the following, the procedure for decoding an intra prediction mode will be described with reference to the flowchart of Fig. 21.

The most probable mode list construction unit 902 derives the intra prediction modes for neighboring blocks from the intra prediction mode memory 901, constructs a most probable mode list mpmList, and determines the size of the most probable mode list mpmlistsize (step S2101). The second embodiment differs from the first embodiment in that the most probable mode list mpmList is constructed so that the most probable mode list size mpmListSize is always 2. Since the procedure for constructing a most probable mode list follows the procedure shown in the flowchart of Fig. 19, as with the procedure performed by the most probable mode list construction unit 602 in Fig. 6, detailed description thereof will be omitted.

The most probable mode determination flag decoding unit 903 reads 1 bit from a coded sequence and decodes the most probable mode determination flag mpmFlag (step S2102) so as to determine the most probable mode determination flag mpmFlag (step S2103).

If the most probable mode determination flag mpmFlag is true, the most probable mode index decoding unit 904 will read another bit from the coded sequence and decode the most probable mode index mpmIndex (step S2104). Thereafter, the most probable mode calculating unit 905 defines the mpmIndex-th element of the most probable mode list mpmList, i.e., mpmList[mpmIndex], as the subject prediction mode currModeIndex (step S2105) and terminates the process. Since the most probable mode list size mpmListSize is always set to 2 in the second embodiment, the procedure of determining the most probable mode list size mpmListSize (step S1004) in the first embodiment shown in Fig. 10 is omitted.

If the most probable mode determination flag mpmFlag is false, the non-probable mode index decoding unit 906 will decode the non-probable mode index remModeIndex (step S2106) and the non-probable mode calculating unit 907 will calculate the subject prediction mode currModeIndex based on the calculated remModeIndex (step S2107). Thereafter, the subject prediction mode currModeIndex is stored in the intra prediction mode memory 901 before the process is terminated. The procedure for decoding the non-probable mode index will be described later. Since the procedure for calculating the subject prediction mode is the same as that at the step S1009 in Fig. 10, the description thereof will be omitted.

[Procedure for decoding the non-probable mode index]

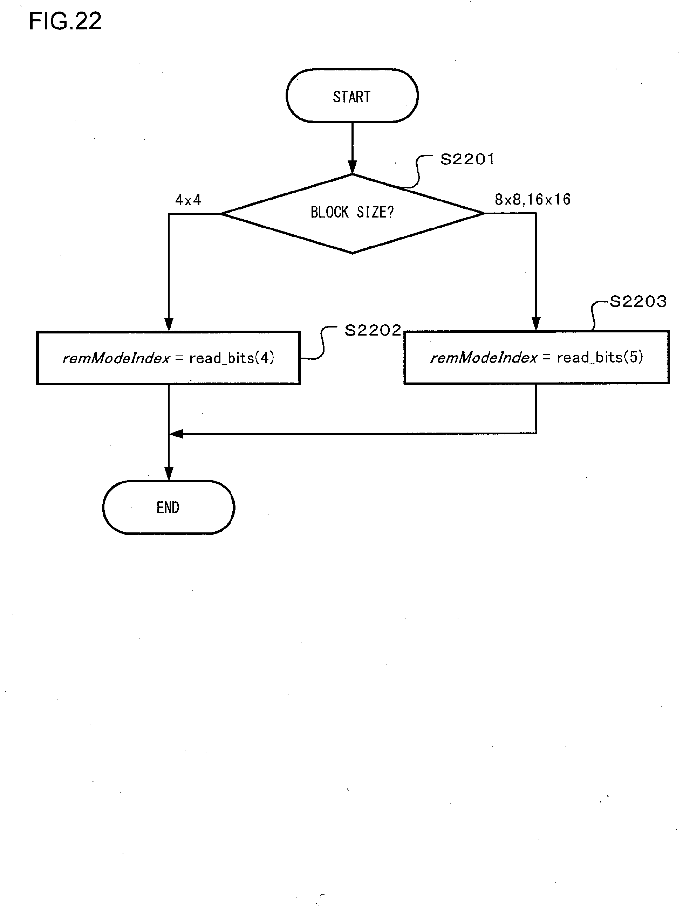

The procedure for decoding the non-probable mode index at the step S2106 in Fig. 21 will be detailed with reference to the flowchart of Fig. 22.

The non-probable mode calculating unit 907 determines the size of the target block (step S2201).

When the target block is a 4x4 block, 4-bit fixed-length decoding is performed to acquire remModeIndex (step S2202). The procedure for decoding the non-probable mode index is then terminated, and the process will proceed to the step S2107 in Fig. 21.

When the target block is an 8x8 block or a 16x16 block, 5-bit fixed-length decoding is performed to acquire remModeIndex (step S2203). The procedure for decoding the non-probable mode index is then terminated, and the process will proceed to the step S2107 in Fig. 21.

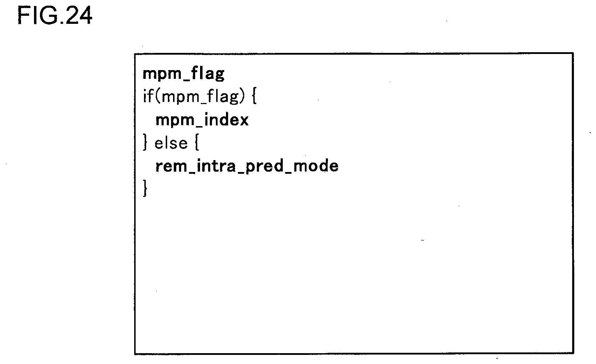

Fig. 24 shows coding syntax for an intra prediction mode in a bitstream output by the coding device or interpreted by the decoding device according to the present embodiment.

(Third embodiment)

The third embodiment differs from the second embodiment only in the procedure for constructing the most probable mode list; accordingly, only the procedure for constructing the most probable mode list will be described, and the other description will be omitted.

[Procedure for constructing the most probable mode list]

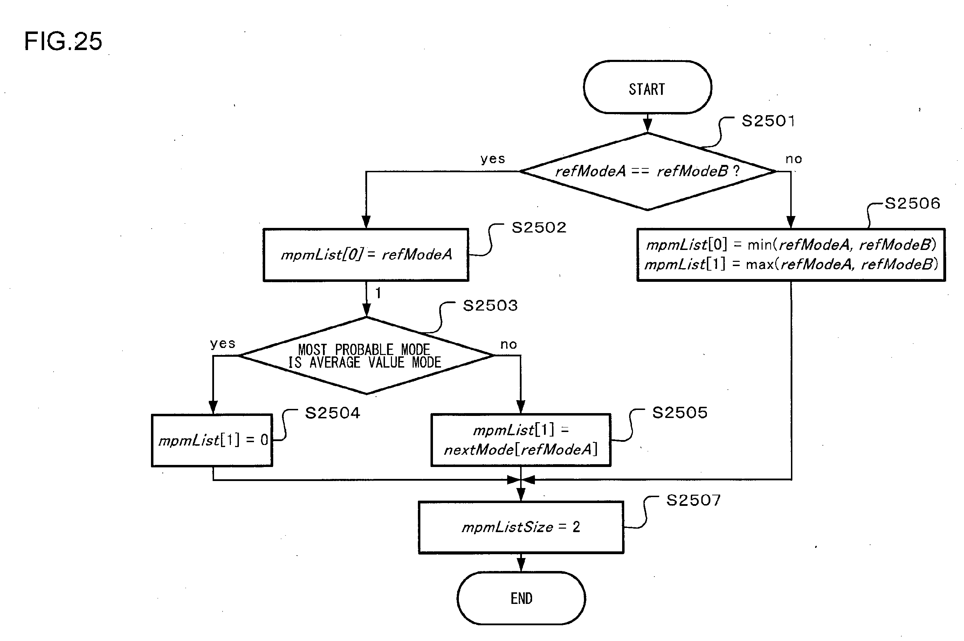

The procedure for determining a reference intra prediction mode at the step S701 in Fig. 17 will be detailed with reference to the flowchart of Fig. 25.

The most probable mode list construction unit 602 derives the intra prediction modes refModeA and refModeB of neighboring blocks from the intra prediction mode memory 601 to compare the refModeA and refModeB (step S2501).

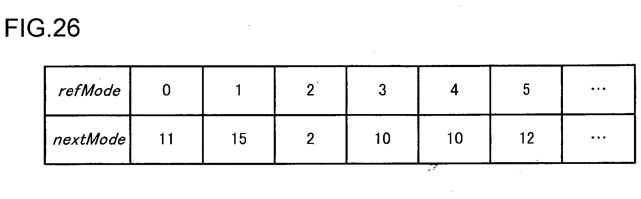

When refModeA and refModeB are identical with each other, mpmList[0] is set to refModeA (step S2502). Subsequently, whether or not refModeA is the average value mode is determined (step S2503), and, if refModeA is the average value mode, mpmList[1] will be set to 0 (step S2504). If refModeA is not the average value mode, mpmList[1] will be set to a prediction mode having the smallest mode index among prediction modes of which the prediction directions are next to the prediction direction of refModeA, with reference to a table (step S2505). Fig. 26 shows an example of a next prediction mode reference table for the intra prediction modes shown as the symbol 201 in Figs. 2. The prediction modes next to the prediction mode 0 are modes 11 and 12, so that the mode 11 having a smaller value is set as the next mode of the prediction mode 0. Thereafter, mpmListSize is set to 2 (step S2507) before the process proceeds to the step S1702 in Fig. 17.

When refModeA and refModeB are different from each other, mpmList[0] is set to min(refModeA,refModeB) and mpmList[1] is set to max(refModeA,refModeB) (step S2506) and mpmListSize is set to 2 (step S2507) before the process proceeds to the step S1702 in Fig. 17.

The third embodiment differs from the second embodiment in the method for setting mpmList[1] when refModeA is identical with refModeB and is not the average value mode. In the second embodiment, mode 0 is exclusively assigned to mpmList[1] when refModeA is identical with refModeB and is not the average value mode. In the third embodiment, on the other hand, a mode next to refModeA is assigned to mpmList[1] when refModeA is identical with refModeB and is not the average value mode. Such a mode next to refModeA is expected to occur frequently, so that, although the computational amount in the procedure of constructing the most probable mode list is increased compared to that in the second embodiment, the most probable mode list can be constructed more effectively, thereby improving the coding efficiency.

The second and third embodiments as described above provide the following effects.

(1) In a coding configuration using two most probable modes, even when the reference prediction modes are the same, a different prediction mode is added as a most probable mode so that two (a fixed number of) most probable modes are always provided. Accordingly, process branches associated with the number of most probable modes can be eliminated, thereby simplifying the process and reducing the circuit size.

(2) As the different prediction mode to be added when the reference prediction modes are the same, a predetermined mode unaffected by the coding process may be employed. A candidate to be added may be a prediction mode that frequently occurs on average, such as the horizontal direction prediction, the vertical direction prediction, or the average value prediction. Accordingly, the process of setting a different prediction mode as a most probable mode can be performed with low loads, and excellent prediction accuracy can be ensured on average.

(3) As the different prediction mode to be added when the reference prediction modes are the same, a prediction mode next to the reference prediction mode may also be employed. Although the loads are increased compared to the case of (2), a more suitable prediction mode can be set as a most probable mode, improving the coding efficiency.

The picture coding device and the picture decoding device according to the embodiment as described above provide the following effects.

(1) Multiple most probable modes are determined among multiple intra prediction modes. Compared to the configuration in which a single most probable mode is provided, the number of most probable modes that can be expressed with shorter code words can be increased, and a code length can be assigned to each most probable mode according to more realistic probability models, so that the amount of generated codes associated with intra prediction modes can be reduced.

(2) When the reference prediction modes are the same, another most probable mode is implicitly determined. Since a most probable intra mode list with a fixed length can be always constructed regardless of whether or not the reference intra prediction modes are the same, process branches in constructing a most probable intra mode list in the coding or decoding process can be eliminated, thereby simplifying the process. Also, since a non-probable intra mode list also has a fixed length, the configuration associated with the coding or decoding process can be simplified and the circuit size can be reduced.

(3) As the another most probable mode implicitly determined, a reference prediction mode or an intra prediction mode determined in advance independently of the coding or decoding process may be used so that an increase in the load of calculating the another most probable mode can be prevented. By using, as the another most probable mode, a prediction mode that frequently occurs in general, such as the vertical direction prediction mode, the horizontal direction prediction mode, or the average value component prediction mode, a decline in the coding efficiency can be prevented.

A bitstream of a moving picture output by a moving picture coding device according to the embodiment described above has a specific data format so as to be decoded according to the coding method used in the embodiment, and a moving picture decoding device appropriate for the moving picture coding device can decode a bitstream having such a specific data format.

When a wired or wireless network is used to transmit a bitstream between a moving picture coding device and a moving picture decoding device, the bitstream may be converted so as to have a data form suitable for the transmission mode of the communication path before being transmitted. In such a case, there will be provided: a moving picture transmission device configured to convert a bitstream output by the moving picture coding device into coded data having a data form suitable for the transmission mode of the communication path and transmit the coded data to the network; and a moving picture receiving device configured to receive the coded data from the network, restore the data to a bitstream, and provide the bitstream to the moving picture decoding device.

The moving picture transmission device comprises a memory for buffering a bitstream output by the moving picture coding device, a packet processing unit for packetizing a bitstream, and a transmission unit for transmitting packetized coded data via the network. Also, the moving picture receiving device comprises a receiving unit for receiving packetized coded data via the network, a memory for buffering received coded data, and a packet processing unit for performing packet processing on coded data to generate a bitstream and providing the bitstream to the moving picture decoding device.

The processing associated with the coding or decoding described above may be performed not only by using hardware, such as a transmission device, a storage device, and a receiving device, but also by using firmware stored in a read only memory (ROM) or a flash memory, computer software, and the like. Furthermore, such a firmware program or a software program may be stored in a computer-readable recording medium or the like so as to be provided, may be provided from a server via a wired or wireless network, or may be provided through data broadcasting using digital terrestrial broadcasting or digital satellite broadcasting.

The present invention has been described with reference to embodiments. The embodiments are intended to be illustrative only, and it will be obvious to those skilled in the art that various modifications to constituting elements or processes could be developed.

[DESCRIPTION OF THE REFERENCE NUMERALS]

501 subtracting unit, 502 orthogonal transformation and quantization unit, 503 inverse quantization and inverse transformation unit, 504 adding unit, 505 decoded picture memory, 506 intra prediction unit, 507 texture information coding unit, 508 intra prediction mode coding unit, 509 intra prediction mode selecting unit, 601 intra prediction mode memory, 602 most probable mode list construction unit, 603 most probable mode determination flag calculating unit, 604 most probable mode determination flag coding unit, 605 most probable mode index calculating unit, 606 most probable mode index coding unit, 607 non-probable mode index calculating unit, 608 non-probable mode index coding unit, 609 most probable mode determination unit, 801 texture information decoding unit, 802 inverse quantization and inverse transformation unit, 803 intra prediction mode decoding unit, 804 adding unit, 805 decoded picture memory, 806 intra prediction unit, 901 intra prediction mode memory, 902 most probable mode list construction unit, 903 most probable mode determination flag decoding unit, 904 most probable mode index decoding unit, 905 most probable mode calculating unit, 906 non-probable mode index decoding unit, 907 non-probable mode calculating unit.

[INDUSTRIAL APPLICABILITY]

The present invention can be used as techniques for picture coding and picture decoding, and particularly techniques for intra-screen coding and intra-screen decoding.

**Claims**

1. A picture coding device adapted to code, in units of blocks, a picture signal using an intra prediction mode selected from among a plurality of intra prediction modes and to code information identifying the selected intra prediction mode, the picture coding device comprising:

   an intra prediction mode selecting unit (509) configured to select an intra prediction mode for a block subject to coding;
   an intra prediction mode storage unit (601) configured to store reference intra prediction modes for coded blocks;
   a most probable mode list construction unit (602) configured to derive, from the intra prediction mode storage unit, a list of most probable modes, which includes a fixed number of two most probable modes, the reference intra prediction modes corresponding to actual intra prediction modes for the left-neighboring block and the above-neighboring block of the block subject to coding, or if such block is not present, to a DC prediction mode ;
   a most probable mode determination flag calculating unit (603) configured to calculate information indicating whether the intra prediction mode for the block subject to coding is probable or not probable;

a most probable mode index derivation unit (605) configured to derive, when the intra prediction mode for the block subject to coding is probable, information identifying the most probable mode in accordance with the list;

a non-probable mode index derivation unit (607) configured to derive, when the intra prediction mode for the block subject to coding is not probable, information identifying the non-probable mode in accordance with the list; and

a coding unit (604, 606, 608) configured to code the information indicating whether the intra prediction mode for the block subject to coding is probable or not probable, to code, when the intra prediction mode for the block subject to coding is probable, the information identifying the most probable mode, and to code, when the intra prediction mode for the block subject to coding is not probable, the information identifying the non-probable mode, wherein the most probable mode list construction unit (602) is configured to construct the list having the fixed number of two most probably modes for any block subject to coding, irrespective of whether the reference intra prediction modes are identical to each other, by

a) when the reference intra prediction modes are different form each other, inserting to the list both of the reference intra prediction modes,

b) when the reference intra prediction modes are identical to each other and the reference intra prediction modes are not the DC prediction mode, inserting, at the first position in the list, one of the reference intra prediction modes, and at the second position in the list, the intra prediction mode having the smallest mode index among prediction modes the prediction directions of which are next to the prediction direction of the reference intra prediction mode, and

c) when the reference intra prediction modes are identical to each other and the reference intra prediction modes are the DC prediction mode, inserting, at the first position in the list, one of the identical reference intra prediction modes, and at the second position in the list, a vertical direction prediction mode.

2. A picture coding method adapted to code, in units of blocks, a picture signal using an intra prediction mode selected from among a plurality of intra prediction modes and to code information identifying the selected intra prediction mode, the picture coding method comprising:

an intra prediction mode selecting step of selecting an intra prediction mode for a block subject to coding;

a most probable mode list construction step of constructing, with reference to a memory storing reference intra prediction modes for coded blocks, a list of most probable modes, which includes a fixed number of two most probable modes, the reference intra prediction modes corresponding to actual intra prediction modes for the left-neighboring block and the above-neighboring block of the block subject to coding, or if such block is not present, to a DC prediction mode ;

a most probable mode determination flag calculating step of calculating information indicating whether the intra prediction mode for the block subject to coding is probable or not probable;

a most probable mode index derivation step of deriving, when the intra prediction mode for the block subject to coding is probable, information identifying the most probable mode in accordance with the list;

a non-probable mode index derivation step of deriving, when the intra prediction mode for the block subject to coding is not probable, information identifying the non-probable mode in accordance with the list; and

a coding step of coding the information indicating whether the intra prediction mode for the block subject to coding is probable or not probable, coding, when the intra prediction mode for the block subject to coding is probable, the information identifying the most probable mode, and coding, when the intra prediction mode for the block subject to coding is not probable, the information identifying the non-probable mode, wherein, in the most probable mode list construction step, the list is constructed to have the fixed number of two most probable modes for any block subject to coding, irrespective of whether the reference intra prediction modes are identical to each other, by

a) when the reference intra prediction modes are different form each other, inserting to the list both of the reference intra prediction modes,

b) when the reference intra prediction modes are identical to each other and the reference intra prediction modes are not the DC prediction mode, inserting, at the first position in the list, one of the reference intra prediction modes, and , at the second position in the list, the intra prediction mode having the smallest mode index among prediction modes the prediction directions of which are next to the prediction direction of the reference intra prediction mode, and

c) when the reference intra prediction modes are identical to each other and the reference intra prediction modes are the DC prediction mode, inserting, at the first position in the list, one of the identical reference intra prediction modes, and , at the second position in the list, a vertical direction prediction mode.

**3.** A picture coding computer program embedded on a non-transitory computer-readable recording medium and comprising instructions which, when the program is executed by a computer, cause the computer to carry out the method of claim 2.

**4.** A picture decoding device adapted to decode, in units of blocks, a bitstream to retrieve information identifying an intra prediction mode and to decode a picture signal using the decoded information identifying an intra prediction mode, the picture decoding device comprising:

an intra prediction mode storage unit (901) configured to store reference intra prediction modes for decoded blocks;

a most probable mode list construction unit (902) configured to derive, from the intra prediction mode storage unit, a list of most probable modes, which includes a fixed number of two most probable modes, the reference intra prediction modes corresponding to actual intra prediction modes for the left-neighboring block and the above-neighboring block of the block subject to coding, or if such block is not present, to a DC prediction mode;

a decoding unit (903, 904, 906) configured to decode the information indicating whether the intra prediction mode for the block subject to decoding is probable or not probable, to decode, when the intra prediction mode for the block subject to decoding is probable, information identifying the most probable mode, and to decode, when the intra prediction mode for the block subject to decoding is not probable, information identifying the non-probable mode;

a most probable mode derivation unit (905) configured to derive, when it is determined that the intra prediction mode for the block subject to decoding is probable by referring to the information indicating whether the intra prediction mode is probable or not probable, the most probable mode from the decoded information identifying the most probable mode and the list; and

a non-probable mode derivation unit (907) configured to derive, when it is determined that the intra prediction mode for the block subject to decoding is not probable by referring to the information indicating whether the intra prediction mode is probable or not probable, the non-probable mode from the decoded information identifying the non-probable mode and the list,

wherein the most probable mode list construction unit (902) is configured to construct the list having the fixed number of two most probable modes for any block subject to decoding, irrespective of whether reference intra prediction modes are identical to each other by

a) when the reference intra prediction modes are different form each other, inserting to the list both of the reference intra prediction modes,

b) when the reference intra prediction modes are identical to each other and the reference intra prediction modes are not the DC prediction mode, inserting, at the first position in the list, one of the reference intra prediction modes, and, at the second position in the list, the intra prediction mode having the smallest mode index among prediction modes the prediction directions of which are next to the prediction direction of the reference intra prediction mode, and

c) when the reference intra prediction modes are identical to each other and the reference intra prediction modes are the DC prediction mode, inserting, at the first position in the list, one of the identical reference intra prediction modes, and, at the second position in the list, a vertical direction prediction mode.

**5.** A picture decoding method adapted to decode, in units of blocks, a bitstream to retrieve information identifying an intra prediction mode and to decode a picture signal using the decoded information identifying an intra prediction mode, the picture decoding method comprising:

a most probable mode list construction step of deriving, with reference to a memory storing reference intra prediction modes for decoded blocks, a list of most probable modes, which includes a fixed number of two most probable modes, the reference intra prediction modes corresponding to actual intra prediction modes for the left-neighboring block and the above-neighboring block of the block subject to coding, or if such block is not present, to a DC prediction mode;

a decoding step of decoding the information indicating whether the intra prediction mode for the block subject to decoding is probable or not probable, decoding, when the intra prediction mode for the block subject to decoding is probable, information identifying the most probable mode, and decoding, when the intra prediction mode for the block subject to decoding is not probable, information identifying the non-probable mode;

a most probable mode derivation step of deriving, when it is determined that the intra prediction mode for the block subject to decoding is probable by referring to the information indicating whether the intra prediction mode is probable or not probable, the most probable mode from the decoded information identifying the most probable mode and the list; and

a non-probable mode derivation step of deriving, when it is determined that the intra prediction mode for the block subject to decoding is not probable by referring to the information indicating whether the intra prediction mode is probable or not probable, the non-probable mode from the decoded information identifying the non-probable mode and the list,

wherein, in the most probable mode list construction step, the list is constructed to have the fixed number of two most probable modes for any block subject to decoding, irrespective of whether the reference intra prediction modes are identical to each other, by

a) when the reference intra prediction modes are different form each other, inserting to the list both of the reference intra prediction modes,

b) when the reference intra prediction modes are identical to each other and the reference intra prediction modes are not the DC prediction mode, inserting, at the first position in the list, one of the reference intra prediction modes, and, at the second position in the list, the intra prediction mode having the smallest mode index among prediction codes the prediction directions of which are next to the prediction direction of the reference intra prediction mode, and

c) when the reference intra prediction modes are identical to each other and the reference intra prediction modes are the DC prediction mode, inserting, at the first position in the list, one of the identical reference intra prediction modes, and, at the second position in the list, a vertical direction prediction mode.

6. A picture decoding computer program embedded on a non-transitory computer-readable recording medium and comprising instructions which, when the program is executed by a computer, cause the computer to carry out the method of claim 5.

**Patentansprüche**

1. Eine Bildcodiervorrichtung, die ausgebildet ist zum Codieren, in Einheiten von Blöcken, eines Bildsignals unter Verwendung eines Intraprädiktionsmodus, der aus einer Vielzahl von Intraprädiktionsmodi ausgewählt ist, und zum Codieren von Informationen, die den ausgewählten Intraprädiktionsmodus identifizieren, wobei die Bildcodiervorrichtung aufweist:

eine Intraprädiktionsmodus-Auswahleinheit (509), die konfiguriert ist zum Auswählen eines Intraprädiktionsmodus für einen zu codierenden Block,

eine Intraprädiktionsmodus-Speichereinheit (601), die konfiguriert ist zum Speichern von Referenz-Intraprädiktionsmodi für codierte Blöcke,

eine Höchstwahrscheinlicher-Modus-Liste-Erstellungseinheit (602), die konfiguriert ist zum Ableiten, aus der Intraprädiktionsmodus-Speichereinheit, einer Liste von höchstwahrscheinlichen Modi, die eine fixe Anzahl von zwei höchstwahrscheinlichen Modi enthält, wobei die Referenz-Intraprädiktionsmodi tatsächlichen Intraprädiktionsmodi für den links benachbarten Block und den oben benachbarten Block des zu codierenden Blocks, oder wenn kein derartiger Block vorhanden ist, einem DC-Prädiktionsmodus entsprechen,

eine Höchstwahrscheinlicher-Modus-Bestimmungsflag-Berechnungseinheit (603), die konfiguriert ist zum Berechnen von Informationen, die angeben, ob der Intraprädiktionsmodus für den zu codierenden Block wahrscheinlich oder nicht-wahrscheinlich ist,

eine Höchstwahrscheinlicher-Modus-Index-Ableitungseinheit (605), die konfiguriert ist zum Ableiten, wenn der Intraprädiktionsmodus für den zu codierenden Block wahrscheinlich ist, von Informationen, die den höchstwahrscheinlichen Modus identifizieren, gemäß der Liste,

eine Nicht-wahrscheinlicher-Modus-Index-Ableitungseinheit (607), die konfiguriert ist zum Ableiten, wenn der Intraprädiktionsmodus für den zu codierenden Block nicht-wahrscheinlich ist, von Informationen, die den nicht-wahrscheinlichen Modus identifizieren, gemäß der Liste, und

eine Codiereinheit (604, 606, 608), die konfiguriert ist zum Codieren der Informationen, die angeben, ob der Intraprädiktionsmodus für den zu codierenden Block wahrscheinlich oder nicht-wahrscheinlich ist, zum Codieren, wenn der Intraprädiktionsmodus für den zu codierenden Block wahrscheinlich ist, der Informationen, die den höchstwahrscheinlichen Modus identifizieren, und zum Codieren, wenn der Intraprädiktionsmodus für den zu codierenden Block nicht-wahrscheinlich ist, der Informationen, die den nicht-wahrscheinlichen Modus identifizieren,

wobei die Höchstwahrscheinlicher-Modus-Liste-Erstellungseinheit (602) konfiguriert ist zum Erstellen der Liste mit der fixen Anzahl von zwei höchstwahrscheinlichen Modi für einen beliebigen zu codierenden Block unabhängig davon, ob die Referenz-Intraprädiktionsmodi identisch sind, durch:

a) wenn die Referenz-Intraprädiktionsmodi verschieden sind, Einsetzen beider Referenz-Intraprädiktionsmodi in die Liste,

b) wenn die Referenz-Intraprädiktionsmodi identisch sind und die Referenz-Intraprädiktionsmodi nicht der DC-Prädiktionsmodus sind, Einsetzen, an der ersten Position in der Liste, eines der Referenz-Intraprädiktionsmodi, und an der zweiten Position in der Liste, des Intraprädiktionsmodus mit dem kleinsten Modusindex innerhalb der Prädiktionsmodi, deren Prädiktionsrichtungen der Prädiktionsrichtung des Referenz-Intraprädiktionsmodus am nächsten sind, und

c) wenn die Referenz-Intraprädiktionsmodi identisch sind und die Referenz-Intraprädiktionsmodi der DC-Prädiktionsmodus sind, Einsetzen, an der ersten Position in der Liste, eines der identischen Referenz-Intraprädiktionsmodi, und an der zweiten Position in der Liste, eines Vertikalrichtung-Prädiktionsmodus.

**2.** Ein Bildcodierverfahren zum Codieren, in Einheiten von Blöcken, eines Bildsignals unter Verwendung eines Intraprädiktionsmodus, der aus einer Vielzahl von Intraprädiktionsmodi ausgewählt ist, und zum Codieren von Informationen, die den ausgewählten Intraprädiktionsmodus identifizieren, wobei das Bildcodierverfahren aufweist:

einen Intraprädiktionsmodus-Auswahlschritt zum Auswählen eines Intraprädiktionsmodus für einen zu codierenden Block,

einen Höchstwahrscheinlicher-Modus-Liste-Erstellungsschritt zum Erstellen, unter Bezugnahme auf einen Speicher, der Referenz-Intraprädiktionsmodi für codierte Blöcke speichert, einer Liste von höchstwahrscheinlichen Modi, die eine fixe Anzahl von zwei höchstwahrscheinlichen Modi enthält, wobei die Referenz-Intraprädiktionsmodi tatsächlichen Intra-Prädiktionsmodi für den links benachbarten Block und den oben benachbarten Block des zu codierenden Blocks, oder wenn kein derartiger Block vorhanden ist, einem DC-Prädiktionsmodus entsprechen,

einen Höchstwahrscheinlicher-Modus-Bestimmungsflag-Berechnungsschritt zum Berechnen von Informationen, die angeben, ob der Intraprädiktionsmodus für den zu codierenden Block wahrscheinlich oder nicht-wahrscheinlich ist,

einen Höchstwahrscheinlicher-Modus-Index-Ableitungsschritt zum Ableiten, wenn der Intraprädiktionsmodus für den zu codierenden Block wahrscheinlich ist, von Informationen, die den höchstwahrscheinlichen Modus identifizieren, gemäß der Liste,

einen Nicht-wahrscheinlicher-Modus-Index-Ableitungsschritt zum Ableiten, wenn der Intraprädiktionsmodus für den zu codierenden Block nicht-wahrscheinlich ist, von Informationen, die den nicht-wahrscheinlichen Modus identifizieren, gemäß der Liste, und

einen Codierschritt zum Codieren der Informationen, die angeben, ob der Intraprädiktionsmodus für den zu codierenden Block wahrscheinlich oder nicht-wahrscheinlich ist, zum Codieren, wenn der Intraprädiktionsmodus für den zu codierenden Block wahrscheinlich ist, der Informationen, die den höchstwahrscheinlichen Modus identifizieren, und zum Codieren, wenn der Intraprädiktionsmodus für den zu codierenden Block nicht-wahrscheinlich ist, der Informationen, die den nicht-wahrscheinlichen Modus identifizieren,

wobei in dem Höchstwahrscheinlicher-Modus-Liste-Erstellungsschritt die Liste derart, dass sie die fixe Anzahl von zwei höchstwahrscheinlichen Modi für den zu codierenden Block unabhängig davon, ob die Referenz-Intraprädiktionsmodi identisch sind, aufweist, erstellt wird durch:

a) wenn die Referenz-Intraprädiktionsmodi verschieden sind, Einsetzen beider Referenz-Intraprädiktionsmodi in die Liste,

b) wenn die Referenz-Intraprädiktionsmodi identisch sind und die Referenz-Intraprädiktionsmodi nicht der DC-Prädiktionsmodus sind, Einsetzen, an der ersten Position in der Liste, eines der Referenz-Intraprädiktionsmodi, und an der zweiten Position in der Liste, des Intraprädiktionsmodus mit dem kleinsten Modusindex innerhalb der Prädiktionsmodi, deren Prädiktionsrichtungen der Prädiktionsrichtung des Referenz-Intraprädiktionsmodus am nächsten sind, und

c) wenn die Referenz-Intraprädiktionsmodi identisch sind und die Referenz-Intraprädiktionsmodi der DC-Prädiktionsmodus sind, Einsetzen, an der ersten Position in der Liste, eines der identischen Referenz-Intraprädiktionsmodi, und an der zweiten Position in der Liste, eines Vertikalrichtung-Prädiktionsmodus.

**3.** Ein Bildcodier-Computerprogramm, das in einem nicht-transitorischen, computerlesbaren Aufzeichnungsmedium eingebettet ist und Befehle aufweist, die bei einer Ausführung des Programms durch einen Computer veranlassen, dass der Computer das Verfahren von Anspruch 2 durchführt.

4. Eine Bilddecodiervorrichtung zum Decodieren, in Einheiten von Blöcken, eines Bitstroms für das Wiederherstellen von Informationen, die einen Intraprädiktionsmodus identifizieren, und zum Decodieren eines Bildsignals unter Verwendung der decodierten Informationen, die einen Intraprädiktionsmodus identifizieren, wobei die Bilddecodiervorrichtung aufweist:

eine Intraprädiktionsmodus-Speichereinheit (901), die konfiguriert ist zum Speichern von Referenz-Intraprädiktionsmodi für decodierte Blöcke,

eine Höchstwahrscheinlicher-Modus-Liste-Erstellungseinheit (902), die konfiguriert ist zum Abrufen, aus der Intraprädiktionsmodus-Speichereinheit, einer Liste von höchstwahrscheinlichen Modi, die eine fixe Anzahl von zwei höchstwahrscheinlichen Modi enthält, wobei die Referenz-Intraprädiktionsmodi tatsächlichen Intraprädiktionsmodi für den links benachbarten Block und den oben benachbarten Block des zu codierenden Blocks, oder wenn kein derartiger Block vorhanden ist, einem DC-Prädiktionsmodus entsprechen,

eine Decodiereinheit (903, 904, 906), die konfiguriert ist zum Decodieren der Informationen, die angeben, ob der Intraprädiktionsmodus für den zu decodierenden Block wahrscheinlich oder nicht-wahrscheinlich ist, zum Decodieren, wenn der Intraprädiktionsmodus für den zu decodierenden Block wahrscheinlich ist, von Informationen, die den höchstwahrscheinlichen Modus identifizieren, und zum Decodieren, wenn der Intraprädiktionsmodus für den zu decodierenden Block nicht-wahrscheinlich ist, von Informationen, die den nicht-wahrscheinlichen Modus identifizieren,

eine Höchstwahrscheinlicher-Modus-Ableitungseinheit (905), die konfiguriert ist zum Ableiten, wenn bestimmt wird, dass der Intraprädiktionsmodus für den zu decodierenden Block wahrscheinlich ist, unter Bezugnahme auf die Informationen, die angeben, ob der Intraprädiktionsmodus wahrscheinlich oder nicht-wahrscheinlich ist, des höchstwahrscheinlichen Modus aus den decodierten Informationen, die den höchstwahrscheinlichen Modus identifizieren, und der Liste, und

eine Nicht-wahrscheinlicher-Modus-Ableitungseinheit (907), die konfiguriert ist zum Ableiten, wenn bestimmt wird, dass der Intraprädiktionsmodus für den zu decodierenden Block nicht-wahrscheinlich ist, unter Bezugnahme auf die Informationen, die angeben, ob der Intraprädiktionsmodus wahrscheinlich oder nicht-wahrscheinlich ist, des nicht-wahrscheinlichen Modus aus den decodierten Informationen, die den nicht-wahrscheinlichen Modus identifizieren, und der Liste,

wobei die Höchstwahrscheinlicher-Modus-Liste-Erstellungseinheit (902) konfiguriert ist zum Erstellen der Liste mit der fixierten Anzahl von zwei höchstwahrscheinlichen Modi für einen beliebigen zu decodierenden Block unabhängig davon, ob die Referenz-Intraprädiktionsmodi identisch sind, durch:

a) wenn die Referenz-Intraprädiktionsmodi verschieden sind, Einsetzen beider Referenz-Intraprädiktionsmodi in die Liste,

b) wenn die Referenz-Intraprädiktionsmodi identisch sind und die Referenz-Intraprädiktionsmodi nicht der DC-Prädiktionsmodus sind, Einsetzen, an der ersten Position in der Liste, eines der Referenz-Intraprädiktionsmodi, und an der zweiten Position in der Liste, des Intraprädiktionsmodus mit dem kleinsten Modusindex innerhalb der Prädiktionsmodi, deren Prädiktionsrichtungen der Prädiktionsrichtung des Referenz-Intraprädiktionsmodus am nächsten sind, und

c) wenn die Referenz-Intraprädiktionsmodi identisch sind und die Referenz-Intraprädiktionsmodi der DC-Prädiktionsmodus sind, Einsetzen, an der ersten Position in der Liste, eines der identischen Referenz-Intraprädiktionsmodi, und an der zweiten Position in der Liste, eines Vertikalrichtungs-Prädiktionsmodus.

5. Ein Bilddecodierverfahren, das ausgebildet ist zum Decodieren, in Einheiten von Blöcken, eines Bitstroms für das Wiederherstellen von Informationen, die einen Intraprädiktionsmodus identifizieren, und zum Decodieren eines Bildsignals unter Verwendung der decodierten Informationen, die einen Intraprädiktionsmodus identifizieren, wobei das Bilddecodierverfahren aufweist:

einen Höchstwahrscheinlicher-Modus-Liste-Erstellungsschritt zum Ableiten, unter Bezugnahme auf einen Speicher, der Referenz-Intraprädiktionsmodi für decodierte Blöcke speichert, einer Liste von höchstwahrscheinlichen Modi, die eine fixe Anzahl von zwei höchstwahrscheinlichen Modi enthält, wobei die Referenz-Intraprädiktionsmodi tatsächlichen Intraprädiktionsmodi für den links benachbarten Block und den oben benachbarten Block des zu codierenden Blocks, oder wenn kein derartiger Block vorhanden ist, einem DC-Prädiktionsmodus entsprechen,

einen Decodierschritt zum Decodieren der Informationen, die angeben, ob der Intraprädiktionsmodus für den zu decodierenden Block wahrscheinlich oder nicht-wahrscheinlich ist, zum Decodieren, wenn der Intraprädiktionsmodus für den zu decodierenden Block wahrscheinlich ist, von Informationen, die den höchstwahrscheinlichen Modus identifizieren, und zum Decodieren, wenn der Intraprädiktionsmodus für den zu decodierenden Block nicht-wahrscheinlich ist, von Informationen, die den nicht-wahrscheinlichen Modus identifizieren, einen Höchstwahrscheinlicher-Modus-Ableitungsschritt zum Ableiten, wenn bestimmt wird, dass der Intraprädiktionsmodus für den zu decodierenden Block wahrscheinlich ist, unter Bezugnahme auf die Informationen, die angeben, ob der Intraprädiktionsmodus wahrscheinlich oder nicht-wahrscheinlich ist, des höchstwahrscheinlichen Modus aus den decodierten Informationen, die den höchstwahrscheinlichen Modus identifizieren, und der Liste, und

einen Nicht-wahrscheinlicher-Modus-Ableitungsschritt zum Ableiten, wenn bestimmt wird, dass der Intraprädiktionsmodus für den zu decodierenden Block nicht-wahrscheinlich ist, unter Bezugnahme auf die Informationen, die angeben, ob der Intraprädiktionsmodus wahrscheinlich oder nicht-wahrscheinlich ist, des nicht-wahrscheinlichen Modus aus den decodierten Informationen, die den nicht-wahrscheinlichen Modus identifizieren, und der Liste,

wobei in dem Höchstwahrscheinlicher-Modus-Liste-Erstellungsschritt die Liste mit der fixierten Anzahl von zwei höchstwahrscheinlichen Modi für einen beliebigen zu decodierenden Block unabhängig davon, ob die Referenz-Intraprädiktionsmodi identisch sind, erstellt wird durch:

a) wenn die Referenz-Intraprädiktionsmodi verschieden sind, Einsetzen beider Referenz-Intraprädiktionsmodi in die Liste,

b) wenn die Referenz-Intraprädiktionsmodi identisch sind und die Referenz-Intraprädiktionsmodi nicht der DC-Prädiktionsmodus sind, Einsetzen, an der ersten Position in der Liste, eines der Referenz-Intraprädiktionsmodi, und an der zweiten Position in der Liste, des Intraprädiktionsmodus mit dem kleinsten Modusindex innerhalb der Prädiktionsmodi, deren Prädiktionsrichtungen der Prädiktionsrichtung des Referenz-Intraprädiktionsmodus am nächsten sind, und

c) wenn die Referenz-Intraprädiktionsmodi identisch sind und die Referenz-Intraprädiktionsmodi der DC-Prädiktionsmodus sind, Einsetzen, an der ersten Position in der Liste, eines der identischen Referenz-Intraprädiktionsmodi, und an der zweiten Position in der Liste, eines Vertikalrichtung-Prädiktionsmodus.

6. Ein Bilddecodier-Computerprogramm, das in einem nicht-transitorischen, computerlesbaren Aufzeichnungsmedium eingebettet ist und Befehle aufweist, die bei einer Ausführung des Programms durch einen Computer veranlassen, dass der Computer das Verfahren von Anspruch 5 ausführt.

## Revendications

1. Dispositif de codage d'image adapté pour coder, en unités de blocs, un signal d'image en utilisant un mode d'intra-prédiction sélectionné parmi une pluralité de modes d'intra-prédiction et pour coder des informations identifiant le mode d'intra-prédiction sélectionné, le dispositif de codage d'image comprenant :

une unité de sélection de mode d'intra-prédiction (509) configurée pour sélectionner un mode d'intra-prédiction pour un bloc soumis au codage ;

une unité de stockage de modes d'intra-prédiction (601) configurée pour stocker des modes d'intra-prédiction de référence pour des blocs codés ;

une unité de construction d'une liste de modes les plus probables (602) configurée pour dériver, à partir de l'unité de stockage de modes d'intra-prédiction, une liste de modes d'intra-prédiction les plus probables, qui comporte un nombre fixe de deux modes les plus probables, les modes d'intra-prédiction de référence correspondant à des modes d'intra-prédiction réels pour le bloc voisin à gauche et pour le bloc voisin au-dessus du bloc soumis au codage, ou, si un tel bloc n'est pas présent, à un mode de prédiction DC ;

une unité de calcul d'indicateur de détermination de mode le plus probable (603) configurée pour calculer des informations indiquant si le mode d'intra-prédiction pour le bloc soumis au codage est probable ou non probable ;

une unité de dérivation d'index de mode le plus probable (605) configurée pour dériver, lorsque le mode d'intra-prédiction pour le bloc soumis au codage est probable, des informations identifiant le mode le plus probable conformément à la liste ;

une unité de dérivation d'index de mode non probable (607) configurée pour dériver, lorsque le mode d'intra-prédiction pour le bloc soumis au codage n'est pas probable, des informations identifiant le mode non probable conformément à la liste ; et

une unité de codage (604, 606, 608) configurée pour coder les informations indiquant si le mode d'intra-prédiction pour le bloc soumis au codage est probable ou non probable, pour coder, lorsque le mode d'intra-prédiction pour le bloc soumis au codage est probable, les informations identifiant le mode le plus probable, et pour coder, lorsque le mode d'intra-prédiction pour le bloc soumis au codage n'est pas probable, les informations identifiant le mode non probable,

dans lequel l'unité de construction d'une liste de modes les plus probables (602) est configurée pour construire la liste ayant le nombre fixe de deux modes les plus probables pour tout bloc soumis au codage, indépendamment de si les modes d'intra-prédiction de référence sont identiques, en

a) lorsque les modes d'intra-prédiction de référence sont différents, insérant dans la liste les deux modes d'intra-prédiction de référence,

b) lorsque les modes d'intra-prédiction de référence sont identiques et les modes d'intra-prédiction de référence ne sont pas le mode de prédiction DC, insérant, en première position dans la liste, un des modes d'intra-prédiction de référence, et, en deuxième position dans la liste, le mode d'intra-prédiction ayant l'index de mode le plus petit parmi des modes de prédiction dont les directions de prédiction sont proches de la direction du mode d'intra-prédiction de référence, et

c) lorsque les modes d'intra-prédiction de référence sont identiques et que les modes d'intra-prédiction de référence sont le mode de prédiction DC, insérant, en première position dans la liste, un des modes d'intra-prédiction de référence identiques, et, en deuxième position dans la liste, un mode de prédiction de direction verticale.

2. Procédé de codage d'image adapté pour coder, en unités de blocs, un signal d'image en utilisant un mode d'intra-prédiction sélectionné parmi une pluralité de modes d'intra-prédiction et pour coder des informations identifiant le mode d'intra-prédiction sélectionné, le procédé de codage d'image comprenant :

une étape de sélection de mode d'intra-prédiction de sélection d'un mode d'intra-prédiction pour un bloc soumis au codage ;

une étape de construction d'une liste de modes les plus probables de construction, en relation avec une mémoire stockant des modes d'intra-prédiction de référence pour des blocs codés, d'une liste de modes les plus probables, qui comporte un nombre fixe de deux modes les plus probables, les modes d'intra-prédiction de référence correspondant aux modes d'intra-prédiction réels pour le bloc voisin à gauche et pour le bloc voisin au-dessus du bloc soumis au codage, ou, si un tel bloc n'est pas présent, à un mode de prédiction DC ;

une étape de calcul d'indicateur de détermination de mode le plus probable de calcul d'informations indiquant si le mode d'intra-prédiction pour le bloc soumis au codage est probable ou non probable ;

une étape de dérivation d'index de mode le plus probable de dérivation, lorsque le mode d'intra-prédiction pour le bloc soumis au codage est probable, des informations identifiant le mode le plus probable conformément à la liste ;

une étape de dérivation d'index de mode non probable de dérivation, lorsque le mode d'intra-prédiction pour le bloc soumis au codage est non probable, d'informations identifiant le mode non probable conformément à la liste ; et

une étape de codage de codage des informations indiquant si le mode d'intra-prédiction pour le bloc soumis au codage est probable ou non probable, codant, lorsque le mode d'intra-prédiction pour le bloc soumis au codage est probable, les informations identifiant le mode le plus probable, et codant, lorsque le mode d'intra-prédiction pour le bloc soumis au codage est non probable, les informations identifiant le mode non probable,

dans lequel, dans l'étape de construction d'une liste de modes les plus probables, la liste est construite pour avoir le nombre fixe de deux modes les plus probables pour tout bloc soumis au codage, indépendamment de si les modes d'intra-prédiction de référence sont identiques, en

a) lorsque les modes d'intra-prédiction de référence sont différents, insérant dans la liste les deux modes d'intra-prédiction de référence,

b) lorsque les modes d'intra-prédiction de référence sont identiques et les modes d'intra-prédiction de référence ne sont pas le mode de prédiction DC, insérant, en première position dans la liste, un des modes d'intra-prédiction de référence, et, en deuxième position dans la liste, le mode d'intra-prédiction ayant l'index de mode le plus petit parmi des modes de prédiction dont les directions de prédiction sont proches de la direction du mode d'intra-prédiction de référence, et

c) lorsque les modes d'intra-prédiction de référence sont identiques et que les modes d'intra-prédiction de référence sont le mode de prédiction DC, insérant, en première position dans la liste, un des modes d'intra-prédiction de référence identiques, et, en deuxième position dans la liste, un mode de prédiction de direction verticale.

3. Programme informatique de codage d'image intégré sur un support d'enregistrement non transitoire lisible par ordinateur et comprenant des instructions qui, lorsque le programme est exécuté par un ordinateur, amènent l'ordinateur à mettre en oeuvre le procédé selon la revendication 2.

**4.** Dispositif de décodage d'image adapté pour décoder, en unités de blocs, un train de bits pour récupérer des informations identifiant un mode d'intra-prédiction et pour décoder un signal d'image en utilisant les informations décodées identifiant un mode d'intra-prédiction, le dispositif de décodage d'image comprenant :

une unité de stockage de mode d'intra-prédiction (901) configurée pour stocker des modes d'intra-prédiction de référence pour des blocs décodés ;

une unité de construction d'une liste de modes les plus probables (902) configurée pour dériver, à partir de l'unité de stockage de modes d'intra-prédiction, une liste de modes les plus probables, qui comporte un nombre fixe de deux modes les plus probables, les modes d'intra-prédiction de référence correspondants à des modes d'intra-prédiction réels pour le bloc voisin à gauche et pour le bloc voisin au-dessus du bloc soumis au codage, ou, si un tel bloc n'est pas présent, à un mode de prédiction DC ;

une unité de décodage (903, 904, 906) configurée pour décoder les informations indiquant si le mode d'intra-prédiction pour le bloc soumis au décodage est probable ou non probable, pour décoder, lorsque le mode d'intra-prédiction pour le bloc soumis au décodage est probable, des informations identifiant le mode le plus probable, et pour décoder, lorsque le mode d'intra-prédiction pour le bloc soumis au décodage est non probable, des informations identifiant le mode non probable ;

une unité de dérivation de mode le plus probable (905) configurée pour dériver, lorsqu'il est déterminé que le mode d'intra-prédiction pour le bloc soumis au décodage est probable en se référant aux informations indiquant si le mode d'intra-prédiction est probable ou non probable, le mode le plus probable à partir des informations décodées identifiant le mode le plus probable et de la liste ; et

une unité de dérivation de mode non probable (907) configurée pour dériver, lorsqu'il est déterminé que le mode d'intra-prédiction pour le bloc soumis au décodage n'est pas probable en se référant aux informations indiquant si le mode d'intra-prédiction est probable ou non probable, le mode non-probable à partir des informations décodées identifiant le mode non probable et de la liste,

dans lequel l'unité de construction d'une liste de modes les plus probables (902) est configurée pour construire la liste ayant le nombre fixe de deux modes les plus probables pour tout bloc soumis au décodage, indépendamment de si les modes d'intra-prédiction de référence sont identiques, en

a) lorsque les modes d'intra-prédiction de référence sont différents, insérant dans la liste les deux modes d'intra-prédiction de référence,

b) lorsque les modes d'intra-prédiction de référence sont identiques et les modes d'intra-prédiction de référence ne sont pas le mode de prédiction DC, insérant, en première position dans la liste, un des modes d'intra-prédiction de référence, et, en deuxième position dans la liste, le mode d'intra-prédiction ayant l'index de mode le plus petit parmi des modes de prédiction dont les directions de prédiction sont proches de la direction du mode d'intra-prédiction de référence, et

c) lorsque les modes d'intra-prédiction de référence sont identiques et que les modes d'intra-prédiction de référence sont le mode de prédiction DC, insérant, en première position dans la liste, un des modes d'intra-prédiction de référence identiques, et, en deuxième position dans la liste, un mode de prédiction de direction verticale.

**5.** Procédé de décodage d'image adapté pour décoder, en unités de blocs, un train binaire pour récupérer des informations identifiant un mode d'intra-prédiction et pour décoder un signal d'image en utilisant les informations décodées identifiant un mode d'intra-prédiction, le procédé de décodage d'image comprenant :

une étape de construction d'une liste de modes les plus probables de dérivation, en relation avec une mémoire stockant des modes d'intra-prédiction de référence pour des blocs décodés, d'une liste de modes d'intra-prédiction les plus probables, qui comporte un nombre fixe de deux modes les plus probables, les modes d'intra-prédiction de référence correspondant à des modes d'intra-prédiction réels pour le bloc voisin à gauche et pour le bloc voisin au-dessus du bloc soumis au codage, ou si un tel bloc n'est pas présent, à un mode de prédiction DC ;

une étape de décodage de décodage des informations indiquant si le mode d'intra-prédiction pour le bloc soumis au décodage est probable ou non probable, décodant, lorsque le mode d'intra-prédiction pour le bloc soumis au décodage est probable, des informations identifiant le mode le plus probable, et décodant, lorsque le mode d'intra-prédiction pour le bloc soumis au décodage est non probable, des informations identifiant le mode non probable ;

une étape de dérivation du mode le plus probable de dérivation, lorsqu'il est déterminé que le mode d'intra-prédiction pour le bloc soumis au décodage est probable en relation avec les informations indiquant si le mode d'intra-prédiction est probable ou non probable, du mode le plus probable à partir des informations décodées identifiant le mode le plus probable et de la liste ; et

une étape de dérivation de mode non probable de dérivation, lorsqu'il est déterminé que le mode d'intra-prédiction pour le bloc soumis au décodage est non probable en relation avec les informations indiquant si le mode d'intra-prédiction est probable ou non probable, du mode non probable à partir des informations décodées identifiant le mode non probable et de la liste,

dans lequel, dans l'étape de construction d'une liste de modes les plus probables, la liste est construite pour avoir le nombre fixe de deux modes les plus probables pour tout bloc soumis au décodage, indépendamment de si les modes d'intra-prédiction de référence sont identiques, en

a) lorsque les modes d'intra-prédiction de référence sont différents, insérant dans la liste les deux modes d'intra-prédiction de référence,

b) lorsque les modes d'intra-prédiction de référence sont identiques et les modes d'intra-prédiction de référence ne sont pas le mode de prédiction DC, insérant, en première position dans la liste, un des modes d'intra-prédiction de référence, et, en deuxième position dans la liste, le mode d'intra-prédiction ayant l'index de mode le plus petit parmi des codes de prédiction dont les directions de prédiction sont proches de la direction du mode d'intra-prédiction de référence, et

c) lorsque les modes d'intra-prédiction de référence sont identiques et que les modes d'intra-prédiction de référence sont le mode de prédiction DC, insérant, en première position dans la liste, un des modes d'intra-prédiction de référence identiques, et, en deuxième position dans la liste, un mode de prédiction de direction verticale.

6. Programme informatique de décodage d'image intégré sur un support d'enregistrement non transitoire lisible par ordinateur et comprenant des instructions qui, lorsque le programme est exécuté par un ordinateur, amènent l'ordinateur à mettre en œuvre le procédé selon la revendication 5.

FIG.1A

| MODE NUMBER | PREDICTION DIRECTION |
|---|---|
| 0 | vertical |
| 1 | horizontal |
| 2 | DC |
| 3 | Diagonal down left |
| 4 | Diagonal down right |
| 5 | Vertical right |
| 6 | Horizontal down |
| 7 | Vertical left |
| 8 | Horizontal up |

FIG.1B

FIG.2A

FIG.2B

FIG.2C

FIG.2D

FIG.3A

301

302

FIG.3B

303

EP 2 723 077 B1

FIG.4A

```
//CODING SYNTAX FOR INTRA PREDICTION MODES
prev_intra_pred_flag
if(!prev_intra_pred_flag) {
  rem_intra_pred_mode
}
```

FIG.4B

```
//CODING SYNTAX FOR INTRA PREDICTION MODES
prev_intra_pred_flag
if(!prev_intra_pred_flag) {
  refer_block_flag
} else {
  rem_intra_pred_mode
}
```

FIG.5

ORIGINAL PICTURE

501

502 ORTHOGONAL TRANSFORMATION AND QUANTIZATION UNIT

507 TEXTURE INFORMATION CODING UNIT

TEXTURE INFORMATION BITSTREAM

503 INVERSE QUANTIZATION AND INVERSE TRANSFORMATION UNIT

504

505 DECODED PICTURE MEMORY

506 INTRA PREDICTION UNIT

509 INTRA PREDICTION MODE SELECTING UNIT

508 INTRA PREDICTION MODE CODING UNIT

INTRA PREDICTION MODE BITSTREAM

EP 2 723 077 B1

FIG.6

EP 2 723 077 B1

# FIG.7

```
           START
             │
             ▼
┌──────────────────────────┐  ╭─ S701
│  CONSTRUCT A MOST         │
│  PROBABLE MODE LIST       │
└──────────────────────────┘
             │
             ▼
┌──────────────────────────┐  ╭─ S702
│ CALCULATE A MOST PROBABLE MODE │
│ DETERMINATION FLAG AND A MOST  │
│ PROBABLE MODE INDEX            │
└──────────────────────────┘
             │
             ▼
┌──────────────────────────┐  ╭─ S703
│  CODE THE MOST            │
│  PROBABLE   MODE          │
│  DETERMINATION FLAG       │
└──────────────────────────┘
             │
             ▼
        ╱──────────╲  ╭─ S704
  TRUE ╱ MOST PROBABLE ╲ FALSE
 ◄─────◄ MODE DETERMINATION ►─────►
       ╲    FLAG?     ╱
        ╲──────────╱
    │                            │
    ▼                            ▼
  ╱────────╲ ╭─S705     ┌──────────────────────┐ ╭─ S707
 ╱ THE NUMBER ╲  TWO    │ CALCULATE A NON-     │
◄ OF MOST PROBABLE ►───►│ PROBABLE MODE INDEX  │
 ╲  MODES?   ╱          └──────────────────────┘
  ╲────────╱ │ONE              │
    │        ▼                 ▼
    │  ┌──────────────┐ ╭─S706 ┌──────────────────────┐ ╭─ S708
    │  │ CODE THE MOST │      │ CODE THE NON-         │
    │  │ PROBABLE MODE │      │ PROBABLE MODE INDEX   │
    │  │ INDEX         │      └──────────────────────┘
    │  └──────────────┘
    │
    ▼
   END
```

FIG.8

EP 2 723 077 B1

# FIG.9

EP 2 723 077 B1

# FIG.10

FIG.11

```
                        ┌──────────┐
                        │  START   │
                        └────┬─────┘
                             │
                             │         ⌐ S1101
                             ▼
          yes        ◇                ◇        no
        ┌───────────  refModeA == refModeB ?  ───────────┐
        │            ◇                ◇                   │
        ▼                                                 ▼
┌──────────────────┐  ⌐ S1102          ┌──────────────────────────────────────┐ ⌐ S1104
│ mpmList[0] =     │                   │ mpmList[0] = min(refModeA, refModeB)   │
│ refModeA         │                   │ mpmList[1] = max(refModeA, refModeB)   │
└────────┬─────────┘                   └──────────────────┬─────────────────────┘
         │                                                 │     ⌐ S1105
         ▼                                                 ▼
┌──────────────────┐  ⌐ S1103          ┌──────────────────────────────────────┐
│ mpmListSize = 1  │                   │          mpmListSize = 2              │
└────────┬─────────┘                   └──────────────────┬─────────────────────┘
         │                                                 │
         └───────────────────┬─────────────────────────────┘
                             ▼
                        ┌──────────┐
                        │   END    │
                        └──────────┘
```

## FIG.12

```
                    START
                      |
                      v
        mpmFlag = false          S1201
        mpmIndex = 0
        i = 0
                      |
                      v
   no        i < mpmListSize ?         S1202
   <---------------
                    | yes
                    v
              mpmList[i] =            S1203
   no <----- currModeIndex ?
   |                | yes
   |                v
   |          mpmFlag = true    S1204        i++    S1205
   |          mpmIndex = i
   |                |                          |
   |<---------------                          |
   v
  END
```

FIG.13

START

remModeIndex = currModeIndex
i = mpmListSize-1 ⌐ S1301

i >= 0 ? ⌐ S1302

no → END

yes

remModeIndex > mpmList[i] ? ⌐ S1303

no → remModeIndex -- ⌐ S1304

yes

i -- ⌐ S1305

END

FIG.14

EP 2 723 077 B1

# FIG.15

START

S1501
BLOCK SIZE?

4x4 → *remModeIndex* = read_bits(4) — S1502

8x8,16x16 → *remModeIndex* = read_bits(5) — S1503

S1504
*remModeIndex* == "11111" ?

yes → *nextBit* = read_bits(1) — S1505

S1506
*nextBit* ?

"0" → *remModeIndex* = 31 — S1507

"1" → *remModeIndex* = 32 — S1508

no

END

EP 2 723 077 B1

FIG.16

START

$$currModeIndex = remModeIndex$$
$$i = 0$$
S1601

no ← $i < mpmListSize$ ? — S1602

yes

$currModeIndex >= mpmList[i]$ ? — S1603

no →

$remModeIndex ++$ — S1604

yes

$i ++$ — S1605

END

FIG.17

```
                        ┌─────────────┐
                        │    START    │
                        └──────┬──────┘
                               │
                               ▼
              ╔════════════════════════════════╗   ⌐ S1701
              ║      CONSTRUCT A MOST          ║
              ║     PROBABLE MODE LIST         ║
              ╚════════════════════════════════╝
                               │
                               ▼
              ╔════════════════════════════════╗   ⌐ S1702
              ║  CALCULATE A MOST PROBABLE MODE ║
              ║  DETERMINATION FLAG AND A MOST  ║
              ║      PROBABLE MODE INDEX        ║
              ╚════════════════════════════════╝
                               │
                               ▼
                ┌──────────────────────────┐     ⌐ S1703
                │ CODE THE MOST PROBABLE MODE │
                │     DETERMINATION FLAG      │
                └──────────────┬─────────────┘
                               │
                               ▼
                         ◇─────────────◇          ⌐ S1704
        true        ◇  MOST PROBABLE MODE  ◇   false
        ◄───────────◇  DETERMINATION FLAG? ◇──────────┐
                         ◇─────────────◇               │
                                                       ▼
                                        ╔═══════════════════════════╗  ⌐ S1706
                                        ║   CALCULATE A NON-PROBABLE ║
                                        ║        MODE INDEX          ║
                                        ╚═══════════════════════════╝
                                                       │
                                                       ▼
   ┌──────────────────────┐  ⌐S1705      ┌───────────────────────────┐ ⌐ S1707
   │ CODE THE MOST PROBABLE │             │ CODE THE NON-PROBABLE MODE INDEX │
   │      MODE INDEX        │             └─────────────┬─────────────┘
   └───────────┬────────────┘                           │
               │                                         │
               │◄────────────────────────────────────────┘
               ▼
         ┌─────────────┐
         │     END     │
         └─────────────┘
```

FIG.18

EP 2 723 077 B1

FIG.19

EP 2 723 077 B1

FIG.20

## FIG.21

FIG.22

```
                          ┌─────────────┐
                          │    START    │
                          └──────┬──────┘
                                 │
                                 │        ⌐ S2201
                                 ▼
                         ╱───────────────╲
        4x4             ╱                 ╲            8x8,16x16
   ┌─────────────────  ╲   BLOCK SIZE?    ╱  ────────────────┐
   │                    ╲               ╱                     │
   │                     ╲─────────────╱                      │
   │                                                          │ ⌐S2203
   ▼                          ⌐ S2202                         ▼
┌────────────────────────┐              ┌────────────────────────┐
│ remModeIndex =         │              │ remModeIndex =         │
│ read_bits(4)           │              │ read_bits(5)           │
└───────────┬────────────┘              └───────────┬────────────┘
            │                                        │
            │◄───────────────────────────────────────┘
            ▼
    ┌───────────────┐
    │      END      │
    └───────────────┘
```

FIG.23

```
mpm_flag
if(mpm_flag) {
  if(mplListSize==2) {
    mpm_index
  }
} else {
  rem_intra_pred_mode
}
```

FIG.24

```
mpm_flag
if(mpm_flag) {
  mpm_index
} else {
  rem_intra_pred_mode
}
```

# FIG.25

START

S2501

refModeA == refModeB ?

yes → S2502

mpmList[0] = refModeA

1

S2503

MOST PROBABLE MODE
IS AVERAGE VALUE MODE

yes → S2504

mpmList[1] = 0

no → S2505

mpmList[1] =
nextMode[refModeA]

no → S2506

mpmList[0] = min(refModeA, refModeB)
mpmList[1] = max(refModeA, refModeB)

S2507

mpmListSize = 2

END

EP 2 723 077 B1

FIG.26

| refMode | 0 | 1 | 2 | 3 | 4 | 5 | ... |
|---------|----|----|----|----|----|----|-----|
| nextMode | 11 | 15 | 2 | 10 | 10 | 12 | ... |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009246975 A


**Non-patent literature cited in the description**

- **YAMAMOTO T et al.** Flexible representation of intra prediction modes. *2. JCT-VC MEETING; 21-7-2010 - 28-7-2010; GENEVA; (JOINT COLLABORATIVE TEAM ON VIDEO CODING OF ISO/IEC JTC1/SC29/WG11 AND ITU-T SG.16),* 23 July 2010, HTTP://WFTP3.ITU.INT/AV-ARCH/JCTVC-SITE